# DEMANDE DE BREVET EUROPEEN

(11) **EP 4 729 981 A1**
(43) Date de publication de la demande: **22.04.2026**
(21) Numéro de dépôt: 25208119.5
(22) Date de dépôt: 10.10.2025
(51) Int. Cl.: G01S 7/4914, G01S 17/36, G01S 7/4863, G01S 7/4915, G01S 17/894

(54) **PIXEL ET CAPTEUR DE DISTANCE**

(30) Priorité: 21.10.2024 FR 2411405
(71) Demandeur: Commissariat à l'Energie Atomique et aux Energies Alternatives, 75015 Paris (FR)
(72) Inventeur: SEGURA PUCHADES, Josep, 38054 GRENOBLE CEDEX 09 (FR); FREY, Laurent, 38054 GRENOBLE CEDEX 09 (FR); DAAMI, Anis, 38054 GRENOBLE CEDEX 09 (FR)
(74) Mandataire: Cabinet Beaumont

(57) **Abrégé**

La présente description concerne un pixel (PIX). Un circuit (CIRC1) fournit, après chaque période d'intégration correspondant à une période d'émission d'un signal FMCW, des premier, deuxième, troisième et quatrième signaux (I, Q, Ic, Qc) représentatifs de charges photogénérées dans un photodétecteur (PD) pendant respectivement des premières, deuxièmes, troisièmes et quatrièmes durées déphasées de Π/2 et répétées à une fréquence d'intégration (fs). Un circuit (CIRC2) fournit un cinquième signal (IIc) déterminé par la différence des premier et troisième signaux (I, Ic), et un sixième signal déterminé (QQc) par la différence des deuxième et troisième signaux (Q, Qc). Un circuit (CIRC3) compare les cinquième et sixième signaux (IIc, QQc) à une première tension déterminée par seuil positif et à une deuxième tension déterminée par un seuil négatif.

## Description

### Domaine technique

La présente description concerne de façon générale les circuits électroniques. La présent demande concerne plus particulièrement les pixels pour l'acquisition d'une distance à une scène et les capteurs comprenant de tels pixels, lorsque l'acquisition des distances est basée sur une mesure de type à onde continue modulée en fréquence (FMCW de l'anglais "Frequency Modulated Continuous Wave").

### Technique antérieure

Pour une mesure de distance de type FMCW, un signal lumineux à onde continue modulée en fréquence est émis par une source lumineuse cohérente, par exemple par un laser, pendant une période d'émission ("chirp duration" en anglais). Un dispositif optique transmet une partie du signal lumineux, par exemple la moitié de la puissance optique émise par la source, en direction d'une scène, et l'autre partie du signal lumineux, par exemple l'autre moitié de la puissance optique émise par la source, en direction d'un pixel. Le signal lumineux transmis en direction de la scène est réfléchi par la scène. Le signal lumineux réfléchi qui en résulte se superpose, ou s'ajoute, au signal lumineux que le dispositif optique a transmis directement au pixel. La superposition de ces deux signaux lumineux résulte en un signal lumineux périodique à une fréquence fR appelée couramment fréquence de battement.

Pour une durée T donnée de la période d'émission et une amplitude B de la modulation en fréquence de la fréquence optique FL du laser, c'est à dire une pente B/T de modulation en fréquence du signal lumineux émis par la source, la fréquence fR est égale à (2.z.B)/(c.T) pour cette période d'émission, avec c la vitesse de la lumière et z la distance entre une sortie du dispositif optique fournissant la partie du signal lumineux envoyé vers la scène et un point de la scène ayant réfléchi ce signal lumineux en direction du pixel, ce point étant appelé point de la scène associé au pixel.

Ainsi, en connaissant B, T et fR, il est possible d'en déduire, par exemple de calculer, la distance z entre le pixel et le point de la scène associé à ce pixel.

Toutefois, les pixels et les capteurs connus mettant en œuvre des mesures de distances basée sur la technologie FMCW présentent divers inconvénients.

### Résumé de l'invention

Il existe un besoin pour un pixel et pour un capteur comprenant une pluralité de pixels adaptés à la mise en œuvre de mesures de distances basées sur la technologie FMCW qui pallient au moins certains des inconvénients des pixels connus et des capteurs connus mettant en œuvre de telles mesures de distances.

Par exemple, il serait souhaitable de disposer d'un pixel et d'un capteur adaptés à la mise en œuvre de mesures de distances basées sur la technologie FMCW qui permettent de détecter une fréquence de battement fR donnée de manière plus précise, moins encombrante, moins complexe et/ou plus rapide que dans les pixels et les capteurs connus adaptés à la mise en œuvre de mesures de distances basées sur la technologie FMCW.

Un mode de réalisation pallie tout ou partie des inconvénients des pixels et des capteurs connus configurés pour mettre en œuvre des mesures de distances basées sur la technologie FMCW.

Un mode de réalisation prévoit un pixel comprenant :
au moins un photodétecteur ;
un premier circuit configuré pour fournir, après chaque période d'intégration correspondant à une période d'émission d'un signal lumineux à onde continue modulée en fréquence, des premier, deuxième, troisième et quatrième signaux représentatifs d'une quantité de charges photogénérées dans ledit au moins un photodétecteur pendant respectivement des premières, deuxièmes, troisièmes et quatrièmes durées de la période d'intégration répétées à une fréquence d'intégration, les deuxièmes durées étant déphasées de Π/2 par rapport aux premières durées, les troisièmes durées étant déphasées de Π par rapport aux premières durées, les quatrièmes durées étant déphasées de 3*Π/2 par rapport aux premières durées, et les premières, deuxièmes, troisièmes, et quatrièmes durées ayant toutes une même durée ;
un deuxième circuit configuré pour fournir un cinquième signal déterminé par la différence des premier et troisième signaux, et un sixième signal déterminé par la différence des deuxième et troisième signaux ; et
un troisième circuit configuré pour :
   - comparer chacun des cinquième et sixième signaux à une première tension déterminée par seuil positif et à une deuxième tension déterminée par un seuil négatif, les seuils positif et négatif ayant une même valeur absolue. La valeur absolue des seuils positif et négatif est déterminée de sorte qu'au moins l'un des cinquième et sixième signaux est supérieur est supérieur à la première tension ou inférieur à la deuxième tension lorsqu'un signal lumineux reçu par le pixel a une fréquence de battement égale à la fréquence d'intégration.

Un autre mode de réalisation prévoit un capteur comprenant :
un ou plusieurs pixels tels que définis ci-dessus ;
une source lumineuse cohérente configurée pour fournir, à chaque période d'émission, le signal lumineux à onde continue modulée en fréquence ;
un dispositif optique configuré, à chaque période d'émission, pour émettre une première partie du signal à onde continue modulée en fréquence vers une scène et une deuxième partie du signal lumineux à onde continue modulée en fréquence vers chaque pixel, de sorte que le signal lumineux reçu par chaque pixel corresponde à la superposition de la deuxième partie du signal lumineux à onde continue modulée en fréquence et d'une réflexion par un point de la scène associé au pixel de la première partie du signal lumineux à onde continue modulée en fréquence.

Selon un mode de réalisation, le capteur comprend un circuit de commande configuré pour commander plusieurs périodes d'émission du signal à onde continue modulée en fréquence et, à chacune desdites plusieurs périodes d'émission, pour maintenir constante une pente de la modulation en fréquence du signal lumineux à onde continue modulée en fréquence et modifier une valeur de la fréquence d'intégration.

Selon un mode de réalisation, le capteur comprend un circuit de commande configuré pour commander plusieurs périodes d'émission du signal à onde continue modulée en fréquence, et, à chacune desdites plusieurs périodes d'émission, pour maintenir constante une valeur de la fréquence de d'intégration et modifier une pente de la modulation en fréquence du signal lumineux à onde continue modulée en fréquence.

Selon un mode de réalisation, après chaque période d'intégration, le troisième circuit de chaque pixel est en outre configuré pour fournir un signal de détection actif si l'un et/ou l'autre des cinquième et sixième signaux est supérieur à la première tension ou inférieur à la deuxième tension.

Selon un mode de réalisation, les premier, deuxième et troisième circuits sont configurés pour que, après chaque période d'intégration, le signal de détection soit actif :
si une différence entre les premier et troisième signaux est, en valeur absolue, supérieure à la valeur absolue des seuils positif et négatif ; et/ou
si une différence entre les deuxième et quatrième signaux est, en valeur absolue, supérieure à la valeur absolue des seuils positif et négatif.

Selon un mode de réalisation :
le capteur comprend un circuit de lecture d'événement d'adresse ; et
chaque pixel comprend un circuit de sortie configuré pour détecter que le signal de détection est actif et pour fournir, suite à une détection que le signal de détection est actif, un signal d'adresse du pixel au circuit de lecture d'événement d'adresse, le circuit de sortie et le circuit de lecture d'événement d'adresse étant, de préférence, configurés pour communiquer l'un avec l'autre selon un protocole poignée de main.

Selon un mode de réalisation, le capteur comprend un circuit de commande configuré pour :
maintenir constante la fréquence d'intégration pendant une période d'acquisition ; et
pendant la période d'acquisition, pour un indice entier croissant i allant de 0 à N-1, avec N un entier strictement positif, et, pour chaque valeur de l'indice i, pour un indice u décroissant allant de U à 0, avec U un entier strictement positif, commander, pour chaque couple d'indices i et u, une période d'émission du signal à onde continue modulé en fréquence avec une excursion de la modulation en fréquence égale à B0/(kⁱ.(2.u+1)), avec B0 une valeur d'excursion en fréquence déterminée par une valeur initiale de distance à détecter et k une valeur positive de résolution, de préférence uniquement si, pour q entier allant de 1 à U, logₖ(2.q+1) est différent de i-j, avec j un indice entier allant de 0 à i-1.

Selon un mode de réalisation, le capteur comprend un circuit de commande configuré pour maintenir constante une pente de modulation en fréquence à chaque période d'émission d'une période d'acquisition ; et
pendant la période d'acquisition, pour un indice entier croissant i allant de 0 à N-1, avec N un entier strictement positif, et, pour chaque valeur de l'indice i, pour un indice u décroissant allant de U à 0, avec U un entier strictement positif, pour commander, pour chaque couple d'indices i et u, une période d'émission du signal à onde continue modulé en fréquence et une valeur de la fréquence d'intégration égale à kⁱ.fs0/(2.u+1) avec fs0 une valeur de fréquence d'intégration déterminée par une valeur initiale de distance à détecter et k une valeur positive de résolution, de préférence uniquement si, pour q entier allant de 1 à U, logₖ(1/(2.q+1)) est différent de i-j, avec j un indice entier allant de 0 à i-1.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de manière schématique et sous la forme de blocs, un exemple d'un mode de réalisation d'un pixel ;
la figure 2 illustre par un chronogramme un fonctionnement d'un circuit du pixel de la figure 1 ;
la figure 3 illustre par des courbes un fonctionnement d'un autre circuit du pixel de la figure 1 ;
la figure 4 représente un exemple de mise en œuvre du pixel de la figure 1 ;
la figure 5 illustre par des chronogrammes un fonctionnement du pixel de la figure 4 ;
la figure 6 représente un autre exemple de mise en œuvre de deux circuits du pixel de la figure 4 ;
la figure 7 représente un autre exemple de mise en œuvre d'un circuit du pixel de la figure 4 ;
La figure 8 représente un autre exemple de mise en œuvre d'un circuit du pixel de la figure 1 ;
la figure 9 représente un autre exemple de mise en œuvre d'un circuit du pixel de la figure 1 ;
la figure 10 représente encore un autre exemple de mise en œuvre d'un circuit du pixel de la figure 1 ;
la figure 11 illustre par des chronogrammes un de fonctionnement d'un système optoélectronique comprenant le pixel de la figure 1 ;
la figure 12 illustre par des chronogrammes un autre exemple de fonctionnement d'un système optoélectronique comprenant le pixel de la figure 1 ;
la figure 13 illustre par des chronogrammes encore un autre exemple de fonctionnement d'un système optoélectronique comprenant le pixel de la figure 1 ;
la figure 14 illustre par des chronogrammes encore un autre exemple de fonctionnement d'un système optoélectronique comprenant le pixel de la figure 1 ;
la figure 15 illustre par des chronogrammes encore un autre exemple de fonctionnement d'un système optoélectronique comprenant le pixel de la figure 1 ;
la figure 16 illustre par des chronogrammes encore un autre exemple de fonctionnement d'un système optoélectronique comprenant le pixel de la figure 1 ; et
la figure 17 illustre un exemple de mise en œuvre d'un circuit du pixel de la figure 1.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures ou à un ... dans une position normale d'utilisation.

Sauf précision contraire, les expressions "environ", "approximativement", "sensiblement", et "de l'ordre de" signifient à 10 % ou à 10° près, de préférence à 5 % ou à 5° près.

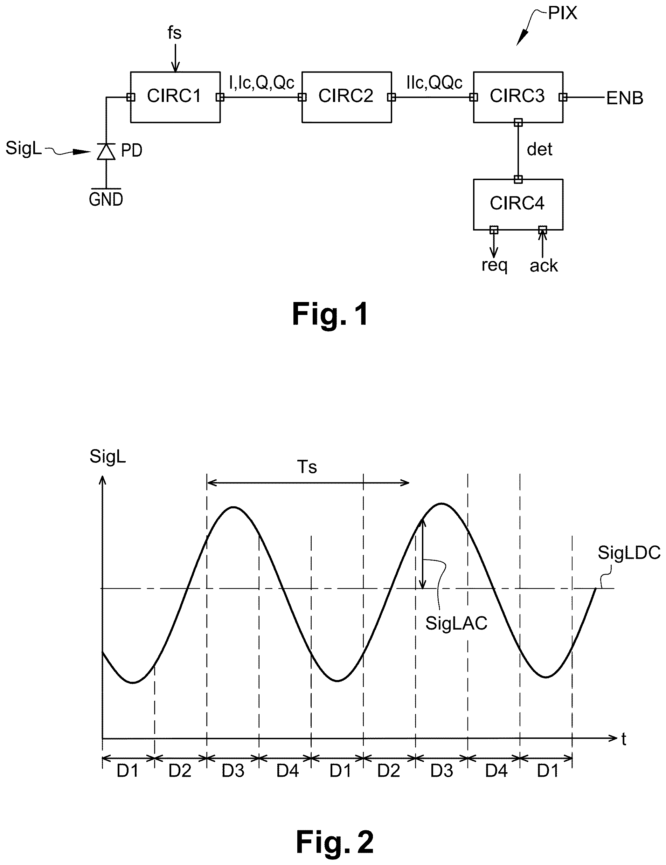

La figure 1 représente, de manière schématique et sous la forme de blocs, un exemple d'un mode de réalisation d'un pixel PIX. Bien que cela ne soit pas illustré en figure 1, ce pixel PIX peut faire partie d'une matrice de pixels PIX d'un capteur de distances.

Le pixel PIX comprend au moins un photodétecteur PD, par exemple au moins une photodiode. Dans l'exemple de la figure 1, le pixel PIX comprend un seul photodétecteur PD.

Chaque photodétecteur PD du pixel PIX est configuré pour recevoir un signal lumineux sigL. Le signal sigL correspond à une superposition d'une partie d'un signal lumineux à onde continue modulée en fréquence et d'une autre partie du signal lumineux à onde continue modulée en fréquence ayant été émise en direction d'une scène et réfléchie par un point de la scène associé au pixel PIX avant d'atteindre ce pixel PIX. Le signal sigL présente donc une fréquence de battement fR déterminée au moins en partie par la distance z entre le pixel PIX et le point de la scène associé au pixel PIX. Par exemple, la fréquence de battement est déterminée par la distance z et par la distance parcourue par la partie de référence du signal lumineux qui est envoyée directement vers le pixel, depuis le dispositif optique séparant le signal lumineux en deux parties jusqu'à ce que cette partie de référence se superpose avec la partie du signal lumineux provenant d'une réflexion sur la scène à imager. Par exemple, comme la distance parcourue par la partie de référence du signal optique est très faible par rapport à la distance z, celle-ci est négligeable par rapport à la distance z et la fréquence de battement est alors considérée comme entièrement déterminée par la distance z.

Bien que cela ne soit pas illustré en figure 1, en pratique le pixel PIX fait partie d'un système optoélectronique, par exemple appelé un capteur de distance, comprenant une source lumineuse cohérente, par exemple une source laser, configurée pour fournir un premier signal lumineux à onde continue modulée en fréquence. Plus particulièrement, le premier signal a sa fréquence fL qui varie de manière continue et linéaire (ou sensiblement linéaire) sur une plage de fréquence d'étendue B, B étant aussi appelée amplitude ou excursion de la modulation en fréquence. Cette modulation en fréquence du premier signal s'effectue de manière continue et linéaire (ou sensiblement linéaire) pendant toute une durée T pendant laquelle le premier signal est émis par la source, c'est à dire pendant toute la durée T de la période (ou durée) d'émission. Ainsi, la pente de la modulation en fréquence du premier signal lumineux est égale à B/T.

En outre, bien que cela ne soit pas illustré en figure 1, le système optoélectronique ou capteur comprenant le pixel PIX et la source lumineuse cohérente émettant le premier signal lumineux comprend un dispositif optique. Le dispositif optique est configuré pour séparer le premier signal en un deuxième signal et un troisième signal, pour émettre le deuxième signal en direction d'une scène, et pour fournir le troisième signal, aussi appelé signal de référence, au pixel PIX, c'est à dire au(x) photodétecteur(s) du pixel PIX. Au niveau du pixel PIX, le troisième signal se superpose avec un signal correspondant à la réflexion par la scène du deuxième signal, par exemple au moyen d'un autre dispositif optique, et le signal sigL correspond à cette superposition de deux signaux lumineux.

Ainsi, la fréquence fR du signal sigL est entièrement déterminée par la pente B/T de la modulation en fréquence pour cette période d'émission et par la distance z à laquelle le point de la scène associé au pixel se trouve lors de cette période d'émission.

Le pixel PIX comprend un circuit CIRC1. Le circuit CIRC1 est couplé, par exemple connecté, à chaque photodétecteur PD du pixel PIX. A titre d'exemple, chaque photodétecteur du pixel PIX a une électrode, par exemple son anode, connectée à un potentiel de référence, par exemple la masse GND, et une autre électrode, par exemple sa cathode, couplée, de préférence connectée, au circuit CIRC1, c'est à dire à une entrée correspondant du circuit CIRC1.

A chaque période d'émission, le pixel PIX, et, plus particulièrement son circuit CIRC1, sont configurés pour mettre en œuvre une période d'intégration correspondante du signal sigL, ou, dit plus simplement, une intégration correspondante du signal sigL.

A chaque période d'intégration du signal sigL, le circuit CIRC1 est configuré pour fournir, à la fin de périodes (ou durées) d'intégration, quatre signaux I, Ic, Q et Qc. Ces signaux peuvent être fournis simultanément et/ou de manière séquentielle à un circuit CIRC2 du pixel PIX, comme cela sera illustré plus loin en relation avec des exemples de mises en œuvre du circuit CIRC1. A titre d'exemple, chaque période (ou durée) d'intégration a une durée égale à la durée T correspondante d'émission du signal lumineux FMCW.

Plus particulièrement, le circuit CIRC1 est configuré pour que le signal I soit représentatif de, ou déterminé par, une quantité de charges photogénérées dans un des photodétecteurs du pixel PIX (dans l'unique photodétecteur PD dans l'exemple de la figure 1) pendant des durées D1 de la période d'intégration. Les durées D1 sont périodiques et sont répétées à une fréquence fs appelée fréquence d'intégration.

De manière similaire, le circuit CIRC1 est configuré pour que le signal Q soit représentatif de, ou déterminé par, une quantité de charges photogénérées dans un des photodétecteurs du pixel PIX (dans l'unique photodétecteur PD dans l'exemple de la figure 1) pendant des durées D2 de la période d'intégration. Les durées D2 sont, comme les durées D1, périodiques à la fréquence fs. En outre, une durée de chaque durée D2 est égale à une durée de chaque durée D1. Dit autrement, les durées D1 et D2 ont chacune une même durée. Les durées D2 sont déphasées de Π/2 par rapport aux durées D1.

Le circuit CIRC1 est en outre configuré pour que le signal Ic soit représentatif de, ou déterminé par, une quantité de charges photogénérées dans un des photodétecteurs du pixel PIX (dans l'unique photodétecteur PD dans l'exemple de la figure 1) pendant des durées D3 de la période d'intégration. Les durées D3 sont, comme les durées D1 et D2, périodiques à la fréquence fs. En outre, les durées D1, D2 et D3 ont chacune une même durée. Les durées D3 sont déphasées de Π par rapport aux durées D1.

Enfin, le circuit CIRC1 est configuré pour que le signal Qc soit représentatif de, ou déterminé par, une quantité de charges photogénérées dans un des photodétecteurs du pixel PIX (dans l'unique photodétecteur PD dans l'exemple de la figure 1) pendant des durées D4 de la période d'intégration. Les durées D4 sont, comme les durées D1, D2 et D3, périodiques à la fréquence fs. En outre, les durées D1, D2, D3 et D4 ont chacune une même durée. Les durées D4 sont déphasées de 3.Π/2 par rapport aux durées D1.

Ainsi, le circuit CIRC1 intègre, à la fréquence d'intégration fs, les charges photogénérées dans le pixel PIX par le signal sigL selon quatre voies, ou phases, fournissant les signaux respectifs I, Ic, Q et Qc correspondant aux durées respectives D1, D3, D2 et D4. Les quatre voies fournissant les signaux respectifs I, Ic, Q et Qc sont, par exemple, appelées voie en phase, voie en phase complémentaire, voie en quadrature, et voie en quadrature complémentaire.

Le circuit CIRC1 reçoit donc des signaux de commande des durées D1, D2, D3 et D4, ces signaux de commande étant cadencés à la fréquence fs.

La figure 2 illustre par un chronogramme un fonctionnement du circuit CIRC1 du pixel PIX de la figure 1.

Dans cet exemple, la fréquence d'intégration fs est égale à la fréquence de battement fR du signal sigL.

En outre, dans cet exemple où le pixel PIX ne comprend qu'un photodétecteur PD, les durées D1, D2, D3, et D4 ont, par exemple, une durée égale à Ts/4, avec Ts la période de répétitions des durées D1, D2, D3 et D4 qui est égale à 1/fs.

Comme cela se voit en figure 2, le signal sigL comprend une composante continue sigLDC et une composante alternative sigLAC (réprésentée de manière schématique la composante sigLDC et l'enveloppe du signal sigL en figure 2). La partie utile du signal sigL est sa composante alternative sigLAC.

En revenant à la figure 1, comme cela a été indiqué précédemment, le circuit CIRC2 reçoit les signaux I, Q, Ic et Qc après chaque période d'intégration des charges photogénérées par le signal sigL dans le pixel PIX.

Le circuit CIRC2 est configuré pour supprimer l'influence de la composante continue sigLDC dans les signaux I, Q, Ic et Qc. Pour cela, le circuit CIRC2 est configuré pour fournir des signaux IIc et QQc. Plus particulièrement, le signal IIc est déterminé par la différence entre les signaux I et Ic, le signal QQc étant déterminé la différence entre les signaux Q et Qc. Par exemple, le signal IIc est déterminé par la différence I-Ic (ou Ic-I) et le signal QQc est déterminé par la différence Q-Qc (ou Qc-Q). A titre d'exemple, le signal IIc est égal à la différence I - Ic (ou Ic-I) plus un décalage VCL fixe, le signal QQc étant égal à la différence Q - Qc (ou Qc - Q) plus le décalage VCL fixe.

Selon un mode de réalisation, le circuit CIRC2 comprend une capacité ayant une première électrode sélectivement couplée à un potentiel continu VCL. A titre d'exemple, le potentiel VCL peut être n'importe quel potentiel fixe, et est, par exemple, un potentiel nul.

Le circuit CIRC2 est alors configuré pour appliquer un signal déterminé par le signal I sur une deuxième électrode de la capacité pendant que la première électrode est couplée au potentiel VCL et est donc à un potentiel au moins en partie déterminé par le potentiel VCL, puis pour appliquer un autre signal déterminé par le signal Ic sur la deuxième électrode de la capacité pendant que la première électrode est découplée du potentiel VCL, ou, dit autrement, laissée flottante. Il en résulte que, à l'issue de ces deux opérations, une tension sur la première électrode flottante de la capacité est déterminée par la différence I-Ic et par le potentiel VCL. Cette tension correspond alors au signal IIc.

De manière similaire, le circuit CIRC2 est configuré pour appliquer un signal déterminé par le signal Q sur une deuxième électrode d'une autre capacité pendant que la première électrode de cette autre capacitée est couplée au potentiel VCL et est donc à un potentiel au moins en partie déterminé par le potentiel VCL, puis pour appliquer un autre signal déterminé par le signal Qc sur la deuxième électrode de cette autre capacité pendant que la première électrode de cette autre capacité est laissée flottante, de sorte que, à l'issue de ces deux opérations, une tension sur la première électrode flottante de cette autre capacité soit déterminée par la différence Q-Qc et par le potentiel VCL et corresponde au signal QQc.

En variante, plutôt que de prévoir une autre capacité pour générer le signal QQc, ce signal peut être généré en utilisant la même capacité que celle utilisée pour générer le signal IIc, les signaux IIc et QQc étant alors produit de manière séquentielle par le circuit CIRC2.

Les signaux IIc et QQc sont fournis à un circuit CIRC3 du pixel PIX.

A titre d'exemple, les deux signaux IIc et QQc sont fournis simultanément au circuit CIRC3, par exemple quand le circuit CIRC2 comprend une capacité pour générer le signal IIc et une autre capacité pour générer le signal QQc et que les deux signaux IIc et QQc sont produits en parallèle par le circuit CIRC2.

A titre d'exemple alternatif, les deux signaux sont fournis l'un après l'autre au circuit CIRC3, par exemple quand le circuit CIRC2 comprend une seule capacité pour générer le signal IIc, puis le signal QQc (ou inversement).

Le circuit CIRC3 est configuré pour comparer la différence entre les signaux I et Ic à deux seuils VTH+ et VTH- ayant des signes opposés mais une même valeur absolue. Par exemple, le seuil VTH+ est positif, le seuil VTH- étant négatif. Pour cela, le circuit CIRC3 compare le signal IIc à une tension V+ déterminée par le seuil VTH+ et à une tension V- déterminée par le seuil VTH-. Par exemple, la tension V+ est déterminée par le seuil VTH+ et le potentiel VCL, la tension V- étant déterminée par le seuil VTH- et le potentiel VCL. Par exemple, la tension V+ est égale à VCL + VTH+ et la tension V- est égale à VCL + VTH-. Le circuit CIRC3 est en outre configuré pour comparer la différence entre les signaux Q et Qc aux deux seuils VTH+ et VTH-. Pour cela, le circuit CIRC3 compare le signal QQc aux tensions V+ et V-. Selon un mode de réalisation, le circuit CIRC3 comprend au moins un comparateur, et les quatre comparaisons décrites ci-dessus sont mises en œuvre par ce ou ces comparateurs du circuit CIRC3.

Selon un mode de réalisation, les seuils VTH+ et VTH-sont déterminés (ou prédéterminés) de sorte que la différence entre les signaux I et Ic soit supérieure à VTH+ ou inférieure à VTH- et/ou la différence entre les signaux Q et Qc soit supérieure à VTH+ ou inférieure à VTH- lorsque la fréquence fR du signal sigL est égale à la fréquence d'intégration fs. Dit autrement, la valeur absolue des seuils VTH+ et VTH- est déterminée (ou prédéterminée) de sorte que la valeur absolue de l'une et/ou l'autre des différences entre les signaux I et Ic et entre les signaux Q et Qc soit supérieure à la valeur absolue des seuils VTH+ et VTH- quand la fréquence de battement fR du signal sigL est égale à la fréquence d'intégration fs. Dit encore d'une autre façon, les seuils VTH+ et VTH- sont déterminés (ou prédéterminés) de sorte que quand l'un et/ou l'autre des signaux IIc et QQc est supérieur à la tension V+ et/ou inférieur à la tension V-, cela signifie que le signal sigL reçu par le pixel PIX a une fréquence de battement fR égale à la fréquence d'intégration fs. A titre d'exemple, les seuils VTH+ et VTH- sont déterminés pendant la conception du système optoélectronique, ou capteur, comprenant le pixel PIX. A titre d'exemple alternatif, les seuils VTH+ et VTH- sont déterminés en interne du système optoélectronique, ou capteur, comprenant le pixel PIX, par exemple sont adaptés en fonction de la période d'émission courante.

A titre d'exemple, la personne du métier sera en mesure de déterminer la valeur absolue des seuils VTH+ et VTH-, par exemple lors d'une phase d'étalonnage ou de manière empirique.

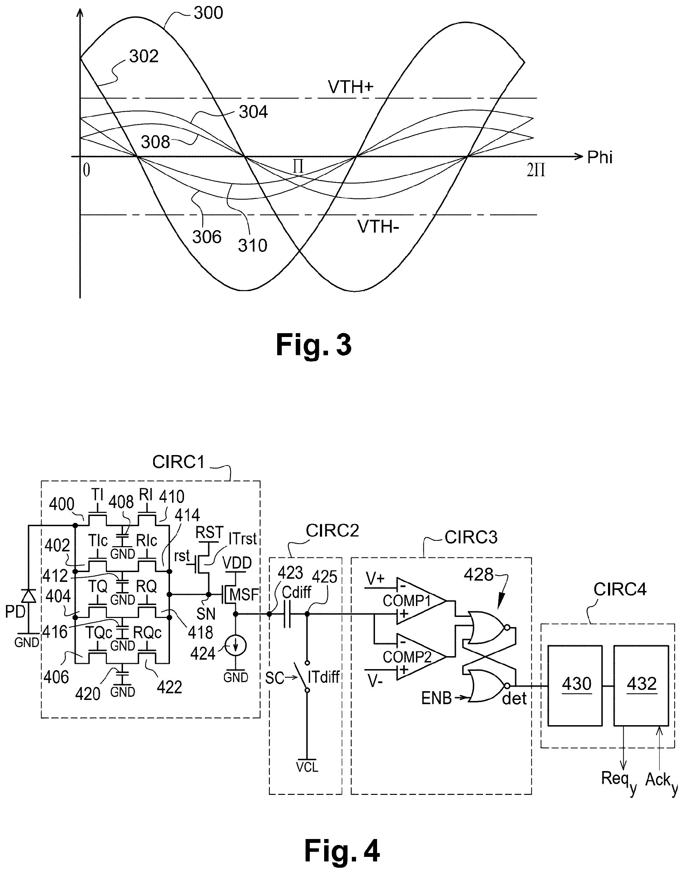

La figure 3 illustre par des courbes un fonctionnement du circuit CIRC3 du pixel PIX de la figure 1.

Plus particulièrement, la figure 3 illustre :
- par des courbes 300 et 302 l'évolution respectivement de la différence entre les signaux I et Ic et de la différence entre les signaux Q et Qc en fonction de la phase Phi entre le signal à la fréquence fs et le signal à la fréquence fR lorsque fR est égale à fs, ou , dit autrement, en fonction de la phase Phi entre le signal réfléchi par la scène et le signal de référence,
- par des courbes 304 et 306 l'évolution respectivement de la différence entre les signaux I et Ic et de la différence entre les signaux Q et Qc en fonction de la phase Phi entre le signal à la fréquence fs et le signal à la fréquence fR lorsque fR est égale à 3 fois la fréquence fs, et
- par des courbes 308 et 310 l'évolution de la différence entre les signaux I et Ic et de la différence entre les signaux Q et Qc en fonction de la phase Phi entre le signal à la fréquence fs et le signal à la fréquence fR lorsque fR est égale à 5 fois la fréquence fs.

En outre, bien que cela ne soit pas visible sur la figure 3, la différence entre les signaux I et Ic et la différence entre les signaux Q et Qc ont chacune une valeur nulle ou presque, quelle que soit la phase Phi lorsque la fréquence fR est égale à 1,001*fs ou à 0,99*fs.

Ainsi, la figure 3 montre que, quelle que soit la phase Phi, la différence entre les signaux I et Ic et/ou la différence entre les signaux Q et Qc sont, en valeur absolue, supérieures à la valeur absolue des seuil VTH+ et VTH-uniquement lorsque la fréquence de battement fR est égale à la fréquence d'intégration fs.

En revenant à la figure 1, selon un mode de réalisation, le circuit CIRC 3 du pixel PIX est configuré pour fournir un signal de détection det indiquant si oui ou non la différence entre les signaux I et Ic et/ou la différence entre les signaux Q et Qc sont, en valeur absolue, supérieures à la valeur absolue des seuils VTH+ et VTH-. Par exemple le signal det est à l'état actif lorsque l'un et/ou l'autre des signaux IIc et QQc est supérieur à la tension V+ ou inférieure à la tension V-. Dit autrement, le signal det est à l'état actif si :
- le signal IIc est supérieur à la tension V+ ou inférieur à la tension V- ; et/ou
- le signal QQc est supérieur à la tension V+ ou inférieur à la tension V-.

De préférence, l'état actif ou inactif du signal det est valide uniquement lorsque qu'un signal ENB est actif.

Selon un mode de réalisation, le pixel PIX comprend un circuit de sortie CIRC4. Le circuit CIRC4 reçoit le signal det du circuit CIRC3.

Le circuit CIRC4 configuré pour fournir, à un circuit de lecture d'un système comprenant le pixel PIX, par exemple à un circuit de lecture d'un capteur comprenant une matrice de pixels PIX, une indication que le pixel PIX a reçu un signal sigL à la fréquence fR égale à fs pour une période d'intégration donnée, c'est à dire pour une période d'émission donnée du signal FMCW.

Par exemple, le circuit CIRC4 est configuré pour mettre en œuvre, avec le circuit de lecture du système comprenant le pixel PIX, une lecture événementielle du pixel PIX. Par exemple, le circuit CIRC4 est configuré pour fournir, au circuit de lecture du système, un signal req indiquant l'adresse du pixel PIX lorsque que le signal det est actif. Plus particulièrement, le circuit CIRC4 fournit le signal req d'adresse du pixel PIX dès que le signal det passe à l'état actif et tant que le circuit de lecture ne fournit pas un signal d'acquittement ack au circuit CIRC4. Le signal ack fourni par le circuit de lecture indique au circuit CIRC4 que le circuit de lecture a bien reçu l'information que le pixel PIX a détecté un signal sigL à la fréquence fR égale à fs.

A titre d'exemple alternatif, le circuit CIRC4 est configuré pour mettre en œuvre, avec le circuit de lecture du système comprenant le pixel PIX, une lecture du pixel PIX au cours de laquelle le circuit CIRC4 indique au circuit de lecture du système si oui ou non le pixel PIX a détecté un signal sigL à la fréquence fR égale à fs lors d'une ou plusieurs dernières périodes d'intégration, uniquement quand le circuit de lecture interroge (ou sélectionne ou lit) le circuit CIRC4 du pixel PIX. A titre d'exemple, dans un capteur comprenant une matrice de pixels PIX, cela permet la mise en œuvre d'une lecture séquentielle des pixels PIX de la matrice, par exemple une lecture ligne par ligne.

Selon un mode de réalisation, il est prévu un capteur comprenant un ou plusieurs pixel PIX, par exemple une matrice de pixels PIX, et comprenant en outre un circuit de commande configuré pour commander plusieurs périodes d'émission du signal FMCW par une source lumineuse cohérente du capteur. A titre d'exemple, ce circuit de commande est configuré pour commander, pour chaque période d'émission du signal FMCW, la valeur de la pente B/T de la modulation en fréquence du signal FMCW émis par la source lumineuse et/ou la valeur de la fréquence d'intégration fs.

Selon un mode de réalisation, le circuit de commande est configuré pour maintenir constante la pente B/T pendant une pluralité de périodes d'émission du signal FMCW et, à chacune de ces plusieurs périodes d'émission, pour modifier la valeur de la fréquence d'intégration fs. Ainsi, chacune de ces plusieurs périodes d'émission permettra de détecter une distance différente du capteur à une scène.

Par exemple, si une première période d'émission est faite avec une valeur A0 du rapport 2.B/(c.T), et que la fréquence fs a une valeur f0, alors un pixel PIX fournira, à la fin d'une période d'intégration correspondante, un signal det actif lorsque ce pixel est à une distance z0 = f0/A0 du point de la scène associé à ce pixel. En outre, si une deuxième période d'émission est faite avec la même valeur A0 du rapport 2.B/(c.T) mais avec une fréquence fs ayant une valeur f1, alors le pixel PIX fournira, à la fin de période d'intégration correspondante, un signal det actif lorsque ce pixel est à une distance z1 = f1/A0 du point de la scène associé à ce pixel.

Selon une variante de réalisation, le circuit de commande est configuré pour maintenir constante la fréquence fs pendant plusieurs périodes d'émission du signal lumineux à onde continue modulée en fréquence, et, à chacune de ces plusieurs périodes d'émission, pour modifier la pente B/T de modulation du signal lumineux émis. Ainsi, chacune de ces plusieurs périodes d'émission permettra de détecter une distance différente du capteur à une scène.

Par exemple, si une première période d'émission est faite avec une valeur A0 du rapport 2.B/(c.T), et que la fréquence d'intégration fs a une valeur f0, alors un pixel PIX fournira, à la fin d'une période d'intégration correspondante, un signal det actif lorsque ce pixel est à une distance z0 = f0/A0 du point de la scène associé à ce pixel. En outre, si une deuxième période d'émission est faite avec la même valeur f0 de la fréquence d'intégration fs, mais avec une valeur A1 du rapport 2.B/(c.T), alors le pixel PIX fournira, à la fin de période d'intégration correspondante, un signal det actif lorsque ce pixel est à une distance z1 = f0/A1 du point de la scène associé à ce pixel.

Dans le pixel PIX, le circuit CIRC3 compare chacun des signaux IIc et QQc aux tensions V+ et V- pour comparer la valeur absolue de la différence entre les signaux I et Ic à la valeur absolue des seuils VTH+ et VTH- et la valeur absolue de la différence entre les signaux Q et Qc à la valeur absolue des seuils VTH+ et VTH-. On aurait pu penser à remplacer le circuit CIRC3 par un circuit configuré pour calculer la moyenne quadratique de la différence entre les signaux I et Ic et de la différence entre les signaux Q et Qc, et pour comparer la moyenne quadratique calculée à un seuil VTHmq. La moyenne quadratique calculée aurait alors été supérieure au seuil VTHmq quand lorsque la fréquence fR du signal sigL aurait été égale à la fréquence d'intégration fs.

Toutefois, cela aurait nécessité un circuit plus complexe que le circuit CIRC3 et plus encombrant que le circuit CIRC3, ce qui n'est pas souhaitable, par exemple dans un capteur comprenant une matrice de pixels PIX.

En outre, le calcul de moyenne quadratique mis en œuvre par un tel circuit aurait été plus lent que la mise en œuvre des comparaisons des signaux IIc et QQc avec les tensions V+ et V-. Par exemple, le temps de calcul de la moyenne quadratique n'aurait pas été compatible avec des applications de capture d'un flux vidéo, alors que le pixel PIX est adapté à de telles applications.

La figure 4 représente un exemple de mise en œuvre du pixel PIX de la figure 1.

Dans le mode de réalisation de la figure 4, le pixel PIX ne comprend qu'un seul photodétecteur PD.

Dans le mode de réalisation de la figure 4, de manière indépendante du fait que le pixel PIX ne comprenne qu'un photodétecteur PD, le circuit CIRC1 est un circuit fonctionnant dans le domaine des charges. Le photodétecteur PD est alors de préférence une photodiode pincée ("pinned photodiode" en anglais).

Dans le mode de réalisation de la figure 4, de manière indépendante du fait que le pixel PIX ne comprenne qu'un seul photodétecteur PD et du fait que le circuit CIRC1 fonctionne dans le domaine des charges, le circuit CIRC2 ne comprend qu'une seule capacité pour générer les signaux IIc et QQc.

Dans le mode de réalisation de la figure 4, de manière indépendante du fait que le pixel PIX ne comprenne qu'un seul photodétecteur PD, que le circuit CIRC1 fonctionne dans le domaine des charges, et que le circuit CIRC2 ne comprenne qu'une seule capacité pour générer les signaux IIc et QQc, le circuit CIRC3 comprend deux comparateurs pour mettre en œuvre les comparaisons des signaux IIc et QQc aux tensions V+ et V-.

Plus particulièrement, dans le mode de réalisation de la figure 4, le circuit CIRC1 comprend quatre grilles de transfert 400, 402, 404 et 406 ayant chacune une borne de conduction connectée au photodétecteur PD.

La grille 400 a sa deuxième borne de conduction connecté à une mémoire 408, par exemple représentée sous la forme d'une capacité en figure 4. En outre, une borne de commande de la grille 400 reçoit un signal de commande TI. La mémoire 408 est couplée à un noeud de lecture SN du circuit CIRC1 par une grille de transfert 410 commandée par un signal RI.

La grille 402 a sa deuxième borne de conduction connecté à une mémoire 412, par exemple représentée sous la forme d'une capacité en figure 4. En outre, une borne de commande de la grille 402 reçoit un signal de commande TIc. La mémoire 412 est couplée au noeud de lecture SN par une grille de transfert 414 commandée par un signal RIc.

La grille 404 a sa deuxième borne de conduction connecté à une mémoire 416, par exemple représentée sous la forme d'une capacité en figure 4. En outre, une borne de commande de la grille 404 reçoit un signal de commande TQ. La mémoire 416 est couplée au noeud de lecture SN par une grille de transfert 418 commandée par un signal RQ.

La grille 406 a sa deuxième borne de conduction connecté à une mémoire 420, par exemple représentée sous la forme d'une capacité en figure 4. En outre, une borne de commande de la grille 406 reçoit un signal de commande TQc. La mémoire 420 est couplée au noeud de lecture SN par une grille de transfert 422 commandée par un signal RQc.

Les signaux TI, TQ, TIc et TQc sont périodiques à la fréquence fs et permettent la mise en œuvre des durées d'intégration respectives D1, D2, D3 et D4.

Le circuit CIRC1 comprend en outre un interrupteur ITrst commandé par un signal rst. L'interrupteur ITrst est connecté entre le noeud SN et un potentiel continu de réinitialisation RST. Lorsque l'interrupteur ITrst est commandé à l'état passant, le potentiel du noeud SN est initialisé au potentiel RST.

Le circuit CIRC1 comprend en outre un transistor MOS (de l'anglais "metal oxide semiconductor" - Métal Oxyde Semiconducteur) référencé MSF en figure 4. Le transistor MSF a sa grille couplée, par exemple connectée, au noeud SN. Le transistor MSF est couplé en série avec une source de courant 424 configurée pour fournir un courant de polarisation au transistor, entre un potentiel d'alimentation VDD et le potentiel de référencer GND. Dans cet exemple, le potentiel VDD est référencé au potentiel GND et est positif, la source de courant 424 est connectée entre la source du transistor MSF et le potentiel GND, et le drain du transistor MSF est couplé, par exemple connecté, au potentiel VDD. Le transistor MSF est alors un transistor MOS à canal N. Toutefois, dans d'autres exemples non illustrés le transistor MSF peut être remplacé par un transistor MOS à canal P, par exemple quand la source de courant 424 est connectée entre la source du transistor MSF et le potentiel VDD, et que le drain du transistor MSF est couplé, de préférence connecté, au potentiel GND.

Dans cet exemple, le transistor MSF est configuré pour fournir les signaux I, Ic, Q et Qc de manière séquentielle sur sa source.

Dans le mode de réalisation de la figure 4, le circuit CIRC2 comprend une capacité Cdiff. Une première électrode 423 de la capacité Cdiff est couplée, par exemple connectée, à la sortie du circuit CIRC1, c'est à dire à la source du transistor MSF dans cet exemple. Une deuxième électrode 425 de la capacité Cdiff est couplée sélectivement à un potentiel continu VCL par un interrupteur ITdiff. Dans l'exemple de la figure 4, l'interrupteur ITdiff est connecté entre le potentiel VCL et l'électrode 425.

La deuxième électrode 425 de la capacité Cdiff constitue, dans cet exemple, la sortie du circuit CIRC2 fournissant les signaux IIc et QQc. Dans cet exemple, les signaux IIc et QQc sont fournis de manière séquentielle.

Dans le mode de réalisation de la figure 4, le circuit CIRC3 comprend deux comparateurs COMP1 et COMP2. Le comparateur COMP1 est configuré pour comparer le signal IIc ou QQc qu'il reçoit à la tension V+. Le comparateur COMP2 est configuré pour comparer le signal IIc ou QQc qu'il reçoit à la tension V-.

A titre d'exemple, les sorties des comparateurs sont fournies à un circuit 428 du circuit CIRC3. Le circuit 428 est commandé par un circuit ENB d'activation. Le circuit 428 est configuré pour recevoir les sorties binaires des comparateurs COMP1 et COMP2 et pour fournir, lorsque le signal ENB est actif, le signal det à l'état actif si l'un ou l'autre des comparateurs COMP1 et COMP2 indique que le signal IIc ou QQc qu'il reçoit est supérieur à VTH+ ou inférieur à VTH-. A titre d'exemple, l'état actif ou inactif du signal det est alors valide lorsque le signal ENB est actif.

A titre d'exemple, le circuit 428 comprend deux portes NON OU. Une porte NON OU a une entrée couplée à la sortie du comparateur COMP1, une entrée couplée à la sortie du comparateur COMP2 et une entrée connectée à la sortie de la deuxième porte NON OU. La deuxième porte NON OU a une entrée connectée à la sortie de la première porte NON OU, une entrée recevant le signal ENB, et sa sortie fournissant le signal det.

A titre d'exemple alternatif, le circuit 428 est omis, et le signal ENB est fourni aux comparateurs COMP1 et COMP2, de sorte que les sorties des comparateurs ne soient mises à jour que lorsque le signal ENB est actif. Dit autrement, les comparateurs COMP1 et COMP2 sont alors des comparateurs verrouillés ("latched comparator" en anglais) sur le signal ENB. Un circuit logique est par exemple prévu pour fournir le signal det à partir des sorties des comparateurs COMP1 et COMP2. A titre d'exemple, l'état actif ou inactif du signal det est alors valide lorsque le signal ENB est actif. A titre d'exemple, dans l'exemple de la figure 4, le circuit logique fournissant le signal det à partir des sorties des comparateurs est une porte logique OU, bien que, dans d'autres exemples où les niveaux haut et bas des sorties des comparateurs sont inversés, ce circuit logique puisse être une porte logique ET.

A titre d'autre exemple alternatif, les comparateurs COMP1 et COMP2 peuvent être remplacés par un unique comparateur.

Par exemple, dans un cas à un seul comparateur, lors d'une phase de comparaison du signal IIc à V+, une des deux entrées de ce comparateur unique reçoit le signal IIc, et l'autre des deux entrées du comparateur unique reçoit la tension V+. Puis, lors d'une phase de comparaison du signal IIc à V-, une des deux entrées du comparateur unique reçoit le signal IIc et l'autre des deux entrées du comparateur unique reçoit la tension V-. La mise en œuvre la comparaison du signal QQc aux tensions V+ et V- est mise en œuvre de manière similaire à ce qui est décrit ci-dessus et est à la portée de la personne du métier à partir de la description faite ci-dessus.

A titre d'exemple, en figure 4, le pixel PIX comprend le circuit CIRC4 et ce dernier est configuré pour mettre en œuvre une lecture évènementielle. Par exemple, le circuit CIRC4 comprend un circuit 430 configuré pour détecter un état actif du signal det et un circuit 432 couplé à la sortie du circuit 430 et configuré pour fournir l'adresse du pixel à un circuit de circuit de lecture de type AER ("Address Event Readout" - lecture d'événement d'adresse), non représenté en figure 4, lorsque le circuit 430 détecte un état actif du signal det. De préférence, le circuit CIRC4 et le circuit de lecture communiquent alors l'un avec l'autre selon un protocole "poignée de main" ("handshake" en anglais). Le protocole "poignée de main" pour les capteurs d'images événementiels (ou imageurs événementiels) est connus. Par exemple, l'article "A Biomorphic Digital Image Sensor" de E. Culurciello et al., publié dans IEEE journal of solid-state circuits, vol. 38, N°2, février 2023, décrit ce type de lecture destinée à la détection de variation d'intensité lumineuse dans un pixel de l'imageur. Ce pixel fournit une requête à un système de décodage basé sur un arbre d'arbitrage AER, lequel génère l'adresse du pixel en évitant les collisions lors de requêtes simultanées par plusieurs pixels de l'imageur. A titre d'autre exemple, l'article "An asynchronous hybrid pixel image sensor" de M. Akrarai et al., 27th IEEE International Symposium on Asynchronous Circuits and System (ASYNC), 2021, utilise le même protocole "poignée de main", mais sans l'arbre d'arbitrage qui est trop volumineux et présente un délai de latence important. A titre d'autre exemple, le brevet US 11889208 propose une autre alternative d'architecture toujours basée sur le protocole poignée de main, mais là aussi sans arbre AER et avec une lecture accélérée. C'est par exemple cette architecture qui sera mise en œuvre dans un imageur événementiel comprenant une pluralité de pixels PIX, par exemple une pluralité de pixels PIX tels que décrits en relation avec la figure 4.

A noter que, dans l'état de la technique, le protocole "poignée de main" est utilisé pour du "vrai" événementiel, c'est à dire pour lire des phénomènes aléatoires (variation lumineuse, arrivée d'un photon, etc). Dans la présente description, ce protocole "poignée de main" permet une méthode de lecture avec des fonctionnalités additionnelles par rapport aux lectures séquentielles usuelles de capteurs d'images. Par exemple, dans un capteur d'images en deux dimensions, l'utilisation d'une lecture basée sur un protocole "poignée de main" permet d'obtenir une grande dynamique, comme cela est décrit dans le document WO 2023126424. Par exemple, dans le cas d'un imageur comprenant une pluralité de pixels PIX et permettant l'obtention d'une image de profondeur, l'utilisation du protocole "poignée de main" pour la lecture des pixels PIX permet, de manière avantageuse, de désactiver un pixel une fois que celui-ci a été lu après avoir envoyé une requête au circuit de lecture de l'imageur, le pixel restant désactivé jusqu'au début de la prochaine période d'acquisition Tac, pour éviter des redondances.

Bien que cela ne soit pas illustré en figure 4, en pratique le pixel PIX comprend un circuit de commande configuré pour lui fournir tous ses signaux de commande. Ce circuit de commande est, par exemple, partagé par plusieurs pixels PIX, par exemple par tous les pixels PIX, d'un capteur comprenant plusieurs pixels PIX.

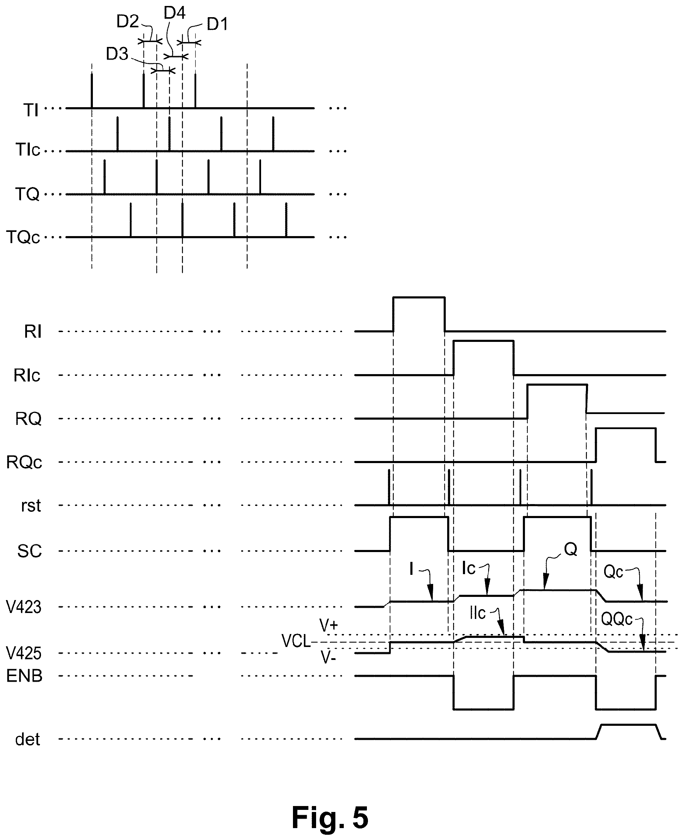

La figure 5 illustre, par des chronogrammes, un exemple de fonctionnement du pixel PIX de la figure 4.

Dans cet exemple, les grilles 400, 402, 404, 406, 410, 414, 418 et 422 sont passantes quand leurs signaux de commande respectifs TI, TIc, TQ, TQc, RI, RIc, RQ et RQc sont à l'état haut. En outre, dans cet exemple, l'interrupteur ITdiff est commandé par un signal SC et est passant quand le signal SC est à l'état haut. Dans les chronogrammes de la figure 5, la tension sur l'électrode 423, respectivement 425, est référencée V423, respectivement V425. Dans cet exemple, la sortie det du circuit 428 est mise à jour à partir des sorties des comparateurs COMP1 et COMP2 lorsque le signal ENB est actif, l'état actif du signal ENB étant, dans cet exemple, l'état bas du signal ENB.

La figure 5 illustre l'évolution des signaux TI, TIc, TQ, TQc, RI, RIc, RQ, RQc, rst, SC, V423, V425, ENB et det.

Comme cela est illustré par les signaux TI, TIc, TQ et TQc, pendant une période d'intégration, les grilles 400, 402, 404 et 406 sont mises à l'état passant de manière périodique, à la fréquence fs, mais avec des déphasages entre elles, de sorte que, à la fin de la période d'intégration, les charges transférées depuis l'élément photosensible PD vers les mémoires respectives 408, 412, 416 et 420 correspondent aux charges photogénérées dans l'élément PD pendant les durées respectives D1, D3, D2 et D4 de la période d'intégration. A titre illustratif, une durée D1, une durée D2, une durée D3, et une durée D4 sont référencées en figure 5.

A la fin de la période d'intégration, les mémoires 408, 412, 416 et 420 sont lues les unes après les autres en commandant les grilles 410, 414, 418 et 422 à l'état passant les unes après les autres.

Avant chaque mise à l'état passant d'une grille 410, 414, 418 ou 422, le noeud SN est réinitialisé en commutant l'interrupteur ITrst à l'état passant.

Dans l'exemple de la figure 5, la mémoire 408 est lue en première (signal RI à l'état haut) et la tension V423 correspond alors au signal I et est à une valeur déterminée par les charges photogénérées dans le pixel PIX pendant les durées D1. Pendant la lecture de la mémoire 408, l'interrupteur ITdiff est à l'état passant, d'où il résulte que la tension V425 est égale au potentiel VCL. Puis, l'interrupteur ITdiff est commuté à l'état bloqué, et la mémoire 412 est lue (RIc à l'état haut). Pendant la lecture de la mémoire 412, la tension V423 correspond au signal Ic et est à une valeur déterminée par les charges photogénérées dans le pixel PIX pendant les durées D3. En outre, pendant la lecture de la mémoire 412, comme l'interrupteur ITdiff est ouvert et que l'électrode 425 est flottante, l'application de la tension Ic sur l'électrode 423 entraine que la tension V425 sur l'électrode 425 est alors égale à IIc, et, plus particulièrement dans cet exemple, à Ic - I + VCL. Pendant que la mémoire 412 est lue, le signal ENB est commuté à l'état actif (état bas dans l'exemple de la figure 5), et le signal det est mis à jour à partir des sorties des comparateurs COMP1 et COMP2. Comme dans l'exemple de la figure 5 la tension IIc est inférieure à V+ et supérieure à V-, le signal det reste à l'état inactif, à savoir à l'état bas dans l'exemple de la figure 5.

Dans l'exemple de la figure 5, après que le circuit CIRC1 ait fourni successivement les signaux I et Ic au circuit CIRC2, que le circuit CIRC2 ait fourni le signal IIc au circuit CIRC3 et que le circuit CIRC3 ait comparé le signal IIc aux tensions V+ et V- et mis à jour le signal det en conséquence, la mémoire 416 est lue (signal RQ à l'état haut). Pendant la lecture de la mémoire 416, la tension V423 correspond au signal Q et est à une valeur déterminée par les charges photogénérées dans le pixel PIX pendant les durées D2. Pendant la lecture de la mémoire 416, l'interrupteur ITdiff est à l'état passant, d'où il résulte que la tension V425 est égale au potentiel VCL. Puis, l'interrupteur ITdiff est commuté à l'état bloqué, et la mémoire 420 est lue (RQc à l'état haut). Pendant la lecture de la mémoire 420, la tension V423 correspond au signal Qc et est à une valeur déterminée par les charges photogénérées dans le pixel PIX pendant les durées D4. En outre, pendant la lecture de la mémoire 420, comme l'interrupteur ITdiff est ouvert et que l'électrode 425 est flottante, l'application de la tension Qc sur l'électrode 423 entraine que la tension V425 sur l'électrode 425 est alors égale à QQc, et, plus particulièrement dans cet exemple, à Qc - Q + VLC. Pendant que la mémoire 420 est lue, le signal ENB est commuté à l'état actif, et le signal det est mis à jour à partir des sorties des comparateurs COMP1 et COMP2. Comme dans l'exemple de la figure 5 la tension QQc est inférieure à V-, le signal det est commuté à l'état actif, à savoir l'état haut dans l'exemple de la figure 5. Ainsi, pendant les étapes décrites ci-dessus, le circuit CIRC1 fournit successivement les signaux Q et Qc au circuit CIRC2, le circuit CIRC2 fournit le signal QQc au circuit CIRC3, et le circuit CIRC3 compare le signal QQc aux tensions V+ et V- et met à jour le signal det en conséquence.

On notera que l'ordre de lecture des mémoires 408 et 412 peut être inversé, que l'ordre de lecture des mémoires 416 et 410 peut être inversé, et que la lecture des mémoires 416 et 420 peut être mise en œuvre avant la lecture des mémoires 408 et 412 sans que cela ne modifie la détection que l'un et/ou l'autre des signaux IIc et QQc est supérieur à la tension V+ ou inférieur à la tension V-.

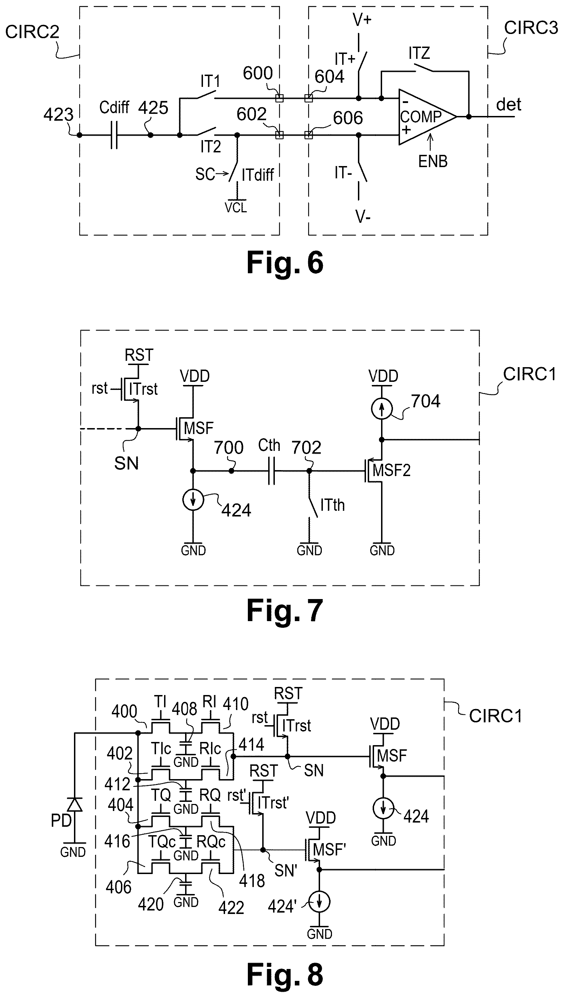

La figure 6 illustre un autre exemple de mise en œuvre des circuits CIRC2 et CIRC3 du pixel PIX de la figure 4.

Dans cet exemple, le circuit CIRC3 ne comprend qu'un seul comparateur COMP.

En outre, dans cet exemple, les circuits CIRC2 et CIRC3 sont configurés pour mettre en œuvre une calibration de l'unique comparateur COMP du circuit CIRC3, de sorte à supprimer, lors des comparaisons du signal IIc aux tensions V+ et V-, et du signal QQc aux tensions V+ et V-, le décalage d'entrée Voff du comparateur COMP.

A titre d'exemple, la calibration du comparateur COMP peut être mise en œuvre de la façon suivante.

Par rapport au circuit CIRC2 de la figure 4, le circuit CIRC2 de la figure 6 comprend deux sorties 600 et 602, et deux interrupteurs IT1 et IT2. L'électrode 425 de la capacité Cdiff est couplée à la sortie 600 par l'interrupteur IT1 et à la sortie 602 par l'interrupteur IT2. La sortie 602 est en outre couplée au potentiel VCL par l'interrupteur ITdiff. Le circuit CIRC3 comprend deux entrées 604 et 606 correspondant aux entrées, par exemple respectivement inverseuse (-) et non inverseuse (+), du comparateur COMP. L'entrée 604 est connectée à la sortie 600, et l'entrée 604 est connectée à la sortie 602. Le comparateur COMP est commandé par le signal ENB, de sorte que sa sortie det n'est mise à jour à partir de ses entrées que quand le signal ENB est à l'état actif. Le circuit CIRC3 comprend en outre un interrupteur ITZ connecté entre la sortie du comparateur COMP et l'entrée inverseuse (-) du comparateur COMP. Un interrupteur IT+ couple l'entrée inverseuse (-) du comparateur COMP à la tension V+ et un interrupteur IT- couple l'entrée non inverseuse (+) du comparateur COMP à la tension V-.

Le fonctionnement des circuits CIRC2 et CIRC3 est, par exemple, le suivant lors de la comparaison du signal IIc aux tensions V+ et V-, c'est à dire lors de la comparaison de la valeur absolue des seuils VTH+ et VTH- à la valeur absolue de la différence entre les signaux I et Ic.

A une première étape, les interrupteurs ITZ, ITdiff et IT1 sont passants, les autres interrupteurs étant bloqués. Le signal I est alors appliqué sur l'électrode 423 de la capacité Cdiff, qui correspond ici à l'entrée du circuit CIRC2. Il en résulte que :
la tension V423 est égale à la tension I,
l'entrée non inverseuse du comparateur COMP reçoit le potentiel VCL (ITdiff passant),
l'entrée inverseuse du comparateur COMP et donc la tension V425 sont à un potentiel égal à VCL + Voff du fait que le comparateur COMP fonctionne en suiveur (ITZ passant), avec Voff la tension de décalage d'entrée du comparateur COMP. La tension Voff est un décalage de tension qui est présent sur l'entrée inverseuse du comparateur COMP par rapport à son entrée non inverseuse. Plus particulièrement, pendant cette première étape, l'électrode 425 de la capacité Cdiff est couplée au potentiel VCL par l'interrupteur IT1 passant, le comparateur COMP et son interrupteur ITZ passant, et l'interrupteur ITdiff passant, et la tension sur l'électrode 425 est donc bien égale à VCL+Voff.

A une deuxième étape, les interrupteurs ITZ et ITdiff sont commutés à l'état bloqué, puis le signal Ic est appliqué sur l'électrode 423 de la capacité Cdiff. Il en résulte que :
l'électrode 425 de la capacité Cdiff est découplée du potentiel VCL et est flottante,
la tension V423 est égale à la tension Ic, et
la tension V425 est alors égale à IIc, c'est à dire à Ic - I + VCL + Voff dans cet exemple.

A une troisième étape, l'interrupteur IT- est commuté à l'état passant. A cette troisième étape, l'électrode 425 de la capacité Cdiff est flottante. Il en résulte que :
l'entrée non inverseuse du comparateur COMP reçoit la tension V- égale à VCL + VTH- dans cet exemple, VTH- étant négatif,
l'entrée inverseuse du comparateur COMP reçoit le signal IIc égal à Ic - I + VCL + Voff dans cet exemple, et
le comparateur COMP met en œuvre la comparaison de son entrée non inverseuse et de son entrée inverseuse alors qu'il y a le décalage Voff entre son entrée non inverseuse et son entrée inverseuse.

Dit autrement, à cette troisième étape, le comparateur COMP détermine si V- - IIc + Voff est supérieur ou non à 0, c'est à dire si VCL + VTH- - (Ic - I) - VCL - Voff + Voff est supérieure ou non à 0, ce qui revient à comparer Ic - I au seuil VTH- en ayant supprimé l'influence de la tension de décalage d'entrée Voff.

Pendant la troisième étape, le signal ENB est commuté à l'état actif pour mettre à jour le signal det.

A une quatrième étape, l'interrupteur IT1 est commuté à l'état bloqué et l'interrupteur IT2 est commuté à l'état passant, et, en outre, l'interrupteur IT+ est commuté à l'état passant et l'interrupteur IT- est commuté à l'état bloqué. A cette troisième étape, l'électrode 425 de la capacité Cdiff est flottante.

Pendant la quatrième étape, le comparateur COMP compare la différence I - Ic au seuil VTH+ en ayant supprimé l'influence de la tension Voff.

Pendant la quatrième étape, le signal ENB est commuté à l'état actif pour mettre à jour le signal det.

La mise en œuvre des troisième et quatrième étapes ci-dessus revient à comparer la valeur absolue de la différence entre les signaux I et Ic avec la valeur absolue des seuils VTH+ et VTH-, en supprimant, lors de ces deux comparaisons, l'influence de la tension de décalage d'entrée Voff. A titre d'exemple, les étapes décrites ci-dessus peuvent être mises en œuvre en fournissant le signal Ic à l'électrode 423 lors de la troisième étape et le signal I à l'électrode 423 lors de la quatrième étape sans que cela ne modifie la fonctionnalité mise en œuvre, à savoir comparer la valeur absolue de la différence entre les signaux I et Ic avec la valeur absolue des seuils VTH+ et VTH-.

Les quatre étapes décrites ci-dessus sont mises en œuvre également pour comparer la valeur absolue de la différence entre les signaux Q et Qc avec la valeur absolue des seuils VTH+ et VTH-, en fournissant le signal Q à l'électrode 423 lors de la deuxième étape, et le signal Qc à l'électrode 423 lors de la troisième étape (ou inversement).

La figure 7 représente un autre exemple de mise en œuvre du circuit CIRC1 du pixel de la figure 4. Pour ne pas surcharger la figure, les grilles 400, 402, 404, 406, 410, 414, 418 et 422, et les mémoires 408, 412, 416 et 420 ne sont pas représentées. Dans cet exemple, le pixel PIX ne comprend qu'un seul photodétecteur PD, de préférence une photodiode pincée, et les grilles de transfert 400, 402, 404 et 406 sont connectées au photodétecteur PD de la même façon qu'en figure 4.

Dans cet exemple, le circuit CIRC1 est configuré pour supprimer le bruit thermique généré sur le noeud SN lors des opérations de réinitialisation de ce dernier, ce bruit étant, par exemple, appelé bruit KT/C.

Ainsi, par rapport à ce qui a été décrit en relation avec la figure 4, le circuit CIRC1 de la figure 7 comprend en outre :
une capacité Cth ayant une électrode 700 connectée à la source du transistor MSF et une autre électrode 702 connectée à la grille d'un transistor MOS monté en source suiveuse MSF2, et un interrupteur ITth connecté entre l'électrode 702 de la capacité Cth et le potentiel de référence GND.

Le circuit CIRC1 comprend en outre une source de courant 704 configuré pour fournir un courant de polarisation au transistor MSF2, c'est à dire à une borne de conduction du transistor MSF2, par exemple sa source. Le transistor MSF2 et la source de courant 704 sont couplées en série entre les potentiels VDD et GND. La source du transistor MSF2 correspond alors à la sortie du circuit CIRC1 sur laquelle seront disponibles, de manière séquentielle dans cet exemple, les signaux I, Ic, Q et Qc.

De manière optionnelle mais préférentielle, le transistor MSF2 est à canal de type opposé à celui du transistor MSF pour limiter les chutes de tension entre la grille du transistor MSF et la source du transistor MSF2. Par exemple, en figure 7, le transistor MSF est à canal N, le transistor MSF2 est à canal P et a sa source connectée à la source de courant 704, et son drain connecté au potentiel GND.

Le fonctionnement du circuit CIRC1 est alors modifié comme suit. Pendant une étape d'initialisation du noeud SN (ITrst passant), l'interrupteur ITth est mis à l'état passant. La tension sur l'électrode 700 de la capacité Cth est alors égale à RST+kTC (en négligeant les chutes de tensions dans l'interrupteur ITrst et entre la grille et la source du transistor MSF), avec kTC le bruit thermique sur le noeud SN. Ensuite, l'interrupteur ITth est commuté à l'état bloqué, et l'une des grilles 410, 414, 418 ou 422 est mise à l'état passant. Il en résulte que le noeud SN se retrouve à une tension égale à Vsig + kTc, où Vsig est déterminée par les charges stockées dans la mémoire 408, 412, 416 ou 420 qui est couplée au noeud SN par l'état passant de la grille respectivement 410, 414, 418 ou 422. La tension sur l'électrode 702 de la capacité Cth est alors égale à Vsig + kTc - (RST + kTC) (en négligeant la chute de tension entre la grille et la source du transistor MSF), donc à Vsig - RST. Cette tension Vsig - RST de laquelle a été supprimé l'influence du bruit thermique de réinitialisation se retrouve alors sur la source du transistor MSF2 (en négligeant la chute de tension grille-source du transistor MSF2) et correspond au signal I, Ic, Q ou Qc selon que la grille qui a été commutée à l'état passant est la grille respectivement 410, 414, 418 ou 422.

Le circuit CIRC1 décrit en relation avec la figure 7 peut être utilisé avec des circuits CIRC2 et CICR3 tels que décrits en relation avec la figure 4, ou avec des circuits CIRC2 et CIRC3 tels que décrits en relation avec la figure 6.

La figure 8 représente un autre exemple de mise en œuvre du circuit CIRC1 du pixel PIX de la figure 1.

Dans cet exemple, le pixel PIX ne comprend qu'un seul photodétecteur PD, de préférence une photodiode pincée.

Le circuit CIRC1 de la figure 8 diffère du circuit CIRC1 de la figure 4 en ce que :
l'ensemble constitué des éléments ITrst, SN, MSF et 424 est dupliqué (éléments ITrst', SN', MSF' et 424' en figure 8),
les grilles 418 et 422 couplent les mémoires respectives 416 et 420 au noeud SN' plutôt qu'au noeud SN.

Ainsi, par rapport au circuit CIRC1 de la figure 4 comprenant une seule sortie sur laquelle les signaux I, Ic, Q et Qc sont disponibles de manière séquentielle, le circuit CIRC1 de la figure 8 comprend une première sortie fournissant les signaux I et Ic de manière séquentielle, et une deuxième sortie fournissant les signaux Q et Qc de manière séquentielle.

Dans l'exemple de la figure 8, la première sortie du circuit CIRC1 correspond à la source du transistor MSF, et la deuxième sortie du circuit CIRC1 correspond à la source du transistor MSF'.

Dans un autre exemple non illustré, le circuit CIRC1 de la figure 8 est en outre configuré pour supprimer le bruit thermique sur les noeuds SN et SN', de manière similaire à ce qui a été décrit en relation avec la figure 7. Par exemple, un premier ensemble d'une capacité Cth, d'un interrupteur ITth, d'un transistor MSF2 et d'une source de courant 704 est connecté à la source du transistor MSF et un deuxième ensemble d'une capacité Cth, d'un interrupteur ITth, d'un transistor MSF2 et d'une source de courant 704 est connecté à la source du transistor MSF'. La source du transistor MSF2 du premier ensemble constitue alors une première sortie du circuit CIRC1 fournissant les signaux I et Ic, et la source du transistor MSF2 du deuxième ensemble constitue alors une deuxième sortie du circuit CIRC1 fournissant les signaux Q et Qc.

A titre d'exemple, ces deux sorties du circuit CIRC1 peuvent être sélectivement couplées à l'entrée d'un unique circuit CIRC2 tel que décrit en relation avec la figure 4 ou avec la figure 6, de sorte que le fonctionnement des circuits CIRC2 et CIRC3 est identique à ce qui a été décrit précédemment en relation avec cette figure 4.

A titre d'exemple alternatif, l'ensemble des composants des circuits CIRC2 et CIRC3 décrits en relation avec la figure 4 ou avec la figure 6 est dupliqué. Par exemple, un premier de ces deux ensembles est connecté à la première sortie du circuit CIRC1, un deuxième de ces deux ensembles est connecté à la deuxième sortie du circuit CIRC1, et le signal det est déterminé à partir des sorties des deux ensembles. Cela permet de mettre en œuvre la comparaison de la valeur absolue de la différence des signaux I et Ic avec la valeur absolue des seuils VTH+ et VTH- en parallèle de la mise en œuvre de la comparaison de la valeur absolue de la différence des signaux Q et Qc avec la valeur absolue des seuils VTH+ et VTH-. Toutefois, des dispersions de fabrication entre les composants du premier ensemble et ceux du deuxième ensemble peuvent introduire un décalage entre les signaux IIc et QQc. La personne du métier sera en mesure d'adapter les séquences de commande des grilles et des interrupteurs des circuits CIRC1, CIRC2 et CIRC3 de cet exemple alternatif à partir de la description faite en relation avec les figures 4, 5, 6 et 7.

Bien que l'on ait décrit ci-dessus d'autres exemples de mises en œuvre du circuit CIRC1 dans le cas où le pixel PIX ne comprend qu'un seul photodétecteur PD, ces exemples de circuits CIRC1 peuvent être mis en œuvre dans un pixel PIX comprenant deux photodétecteurs PD, de préférence identiques. Par exemple, les grilles 400 et 402 sont alors connectées à l'un des deux photodétecteurs PD, et les grilles 404 et 406 sont connectées à l'autre des deux photodétecteurs PD. Dans ce cas, la durée de chacune des durées D1, D2, D3 et D4 peut être plus grande que celle des durées D1, D2, D3 et D4 dans le cas où le pixel PIX ne comprend qu'un seul photodétecteur. Par exemple, chacune des durées D1, D2, D3 et D4 a une valeur égale à Ts/2. La personne du métier sera en mesure d'adapter les séquences de commande des grilles et des interrupteurs des circuits CIRC1, CIRC2 et CIRC3 de cet exemple alternatif à partir de la description faite en relation avec les figures 4, 5, 6, 7 et 8.

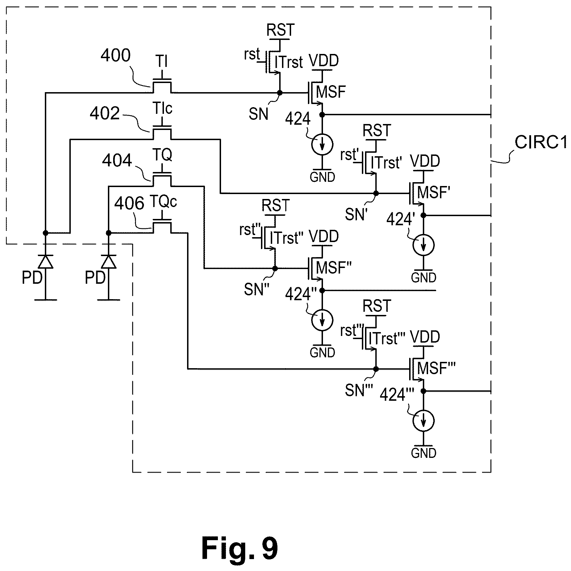

La figure 9 représente un autre exemple de mise en œuvre du circuit CIRC1 du pixel PIX de la figure 1.

Dans cet exemple, le pixel PIX comprend deux photodétecteurs PD.

Le circuit CIRC1 comprend les quatre grilles 400, 402, 404 et 406, commandées par les signaux respectifs TI, TIc, TQ et TQc. Les grilles 400 et 402 ont chacune une première borne de conduction connectée à un premier des deux photodétecteurs PD, les grilles 404 et 406 ayant chacune une première borne de conduction connectée au deuxième des deux photodétecteurs PD.

Toutefois, à la différence des circuits CIRC1 décrits jusqu'ici, dans le circuit CIRC1 de la figure 9, les grilles 400, 402, 404 et 406 ont leurs deuxièmes bornes connectées à des noeuds respectifs SN, SN', SN'' et SN‴, ces noeuds servant de mémoire pour stocker les charges photogénérées transférées depuis les photodétecteurs PD par les grilles 400, 402, 404 et 406. De manière avantageuse, il n'est donc pas nécessaire de prévoir des mémoires intermédiaires 408, 412, 416 et 420.

Comme cela a été décrit en relation avec le circuit CIRC1 de la figure 4, le noeud SN est couplé au potentiel VDD par l'interrupteur ITrst et est connecté à la grille du transistor suiveur MSF, le transistor MSF étant en série avec la source de courant 424 entre les potentiels VDD et GND de sorte que la tension sur sa source soit une image de la tension sur sa grille. De manière similaire, le noeud SN' est couplé au potentiel VDD par un interrupteur ITrst' et est connecté à la grille d'un transistor suiveur MSF', le transistor MSF' étant en série avec une source de courant 424' entre les potentiels VDD et GND de sorte que la tension sur sa source soit une image de la tension sur sa grille, le noeud SN'' est couplé au potentiel VDD par un interrupteur ITrst" et est connecté à la grille d'un transistor suiveur MSF'', le transistor MSF' étant en série avec une source de courant 424" entre les potentiels VDD et GND de sorte que la tension sur sa source soit une image de la tension sur sa grille, et le noeud SN‴ est couplé au potentiel VDD par un interrupteur ITrst''' et est connecté à la grille d'un transistor suiveur MSF‴, le transistor MSF‴ étant en série avec une source de courant 424‴ entre les potentiels VDD et GND de sorte que la tension sur sa source soit une image de la tension sur sa grille. Les interrupteurs ITrst, ITrst', ITrst" et ITrst''' sont commandés par des signaux respectifs rst, rst', rst'' et rst'''.

Dans l'exemple de la figure 9, les durées D1, D2, D3 et D4 ont chacune une valeur par exemple égale à Ts/2. La personne du métier sera en mesure d'adapter les signaux de commande TI, TIc, TQ et TQc à l'exemple de circuit CIRC1 de la figure 9, à partir de la description faite précédemment en relation avec les figures 4, 5, 6, 7 et 8 des autres exemples de pixels PIX.

Dans un autre exemple non illustré, le pixel PIX de la figure 9 ne comprend qu'un seul photodétecteur PD et toutes les grilles ont leurs premières bornes de conduction connectées à cet unique photodétecteur PD. Dans ce cas, les durées D1, D2, D3 et D4 ont, par exemple, chacune une valeur égale à Ts/4.

Dans l'exemple de la figure 9, la source du transistor MSF correspond à une première sortie du circuit CIRC1 fournissant le signal I, la source du transistor MSF' correspondant à une deuxième sortie du circuit CIRC1 fournissant le signal Ic, la source du transistor MSF" correspondant à une troisième sortie du circuit CIRC1 fournissant le signal Q et la source du transistor MSF‴ correspondant à une quatrième sortie du circuit CIRC1 fournissant le signal Qc.

Dans un autre exemple non illustré, la source du transistor MSF est couplée à une première sortie du circuit CIRC1 par un premier ensemble de composants Cth, ITth, MSF2 et 704 tels que décrits en relation avec la figure 7, la source du transistor MSF' est couplée à une deuxième sortie du circuit CIRC1 par un deuxième ensemble de composants Cth, ITth, MSF2 et 704 tels que décrits en relation avec la figure 7, la source du transistor MSF'' est couplée à une troisième sortie du circuit CIRC1 par un troisième ensemble de composants Cth, ITth, MSF2 et 704 tels que décrits en relation avec la figure 7, et la source du transistor MSF‴ est couplée à une quatrième sortie du circuit CIRC1 par un quatrième ensemble de composants Cth, ITth, MSF2 et 704 tels que décrits en relation avec la figure 7.

Par rapport au circuit CIRC1 de la figure 4 comprenant une seule sortie ou au circuit CIRC1 de la figure 8 comprenant deux sorties, le circuit CIRC1 de la figure 9 comprend quatre sorties fournissant les signaux respectifs I, Ic, Q et Qc.

A titre d'exemple, ces quatre sorties du circuit CIRC1 peuvent être sélectivement couplées à l'entrée d'un unique circuit CIRC2 tel que décrit en relation avec la figure 4 ou avec la figure 6, de sorte que le fonctionnement des circuits CIRC2 et CIRC3 est identique à ce qui a été décrit précédemment.

A titre d'exemple alternatif, l'ensemble des composants des circuits CIRC2 et CIRC3 décrits en relation avec la figure 4 ou avec la figure 6 est dupliqué. Par exemple, un premier de ces deux ensembles est connecté sélectivement aux première et deuxième sortie du circuit CIRC1, de sorte à recevoir sélectivement soit le signal I, soit le signal Ic, et un deuxième de ces deux ensembles est connecté sélectivement aux troisième et quatrième sorties du circuit CIRC1 de sorte à recevoir sélectivement soit le signal Q, soit le signal Qc. Le signal det est alors déterminé à partir des sorties des deux ensembles dupliqués. Cela permet de mettre en œuvre la comparaison de la valeur absolue de la différence des signaux I et Ic avec la valeur absolue des seuils VTH+ et VTH- en parallèle de la mise en œuvre de la comparaison de la valeur absolue de la différence des signaux Q et Qc avec la valeur absolue des seuils VTH+ et VTH-. La personne du métier sera en mesure d'adapter les séquences de commande des grilles et des interrupteurs des circuits CIRC1, CIRC2 et CIRC3 de cet exemple alternatif à partir de la description faite du fonctionnement des exemples de circuits CIRC1, CIRC2 et CIRC3 précédemment décrits.

Par ailleurs, on a décrit ci-dessus des modes de réalisation de pixels PIX configurés pour fonctionner dans le domaine des charges, c'est à dire que le ou les photodétecteurs PD des pixels décrits sont de préférence des photodiodes pincées, et que les grilles 400, 402, 404, 406 sont des grilles de transfert. Dans des variantes de réalisation, le pixel PIX, et, en particulier son circuit CIRC1, sont configurés pour fonctionner dans le domaine des tensions, c'est à dire que le ou les photodétecteurs PD du pixel peuvent être des photodiodes classiques (non pincées) et que ce sont des courants fournis par ces photodétecteurs qui sont intégrés, par exemple avec des amplificateurs transimpédance capacitifs (CTIA de l'anglais "Capacitive TransImpedance Amplifier")

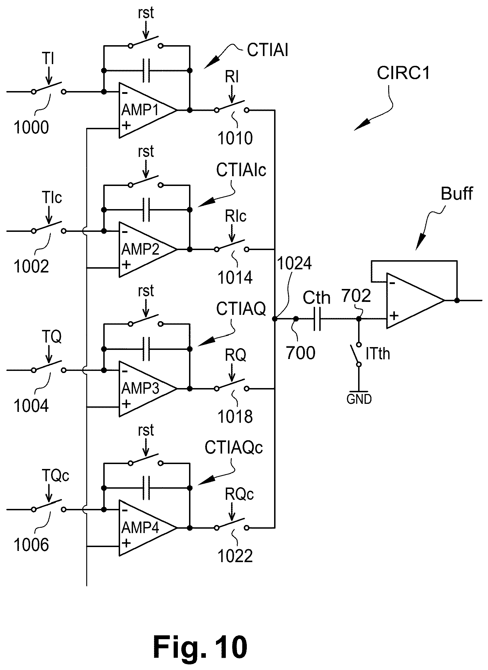

La figure 10 représente un autre exemple de mise en œuvre d'un circuit CIRC1 du pixel PIX de la figure 1. Dans cette variante de réalisation, le pixel PIX est configuré pour fonctionner dans le domaine des tensions.

En figure 10, seul le circuit CIRC1 est illustré, les autres circuits CIRC2, CIRC3 et CIRC4 étant, par exemple, identiques à ce qui a été décrit précédemment.

Dans le circuit CIRC1 de la figure 10, les grilles 400, 402, 404 et 406 sont remplacées par des interrupteurs respectivement 1000, 1002, 1004 et 1006. Les interrupteurs 1000, 1002, 1004 et 1006 sont commandés par des signaux respectivement TI, TIc, TQ et TQc similaires à ceux décrits en relation avec les circuits CIRC1 fonctionnant dans le domaine des charges.

Les interrupteurs 1000, 1002, 1004 et 1006 peuvent, de manière similaire aux grilles 400, 402, 404 et 406 avoir leurs premières bornes de conduction toutes connectées à un même et unique photodétecteur PD du pixel, qui peut être ici une photodiode non pincée. A titre d'exemple alternatif, dans un pixel PIX à deux photodétecteurs pouvant être des photodiodes non pincées, les interrupteurs 1000 et 1002 ont leurs premières bornes de conduction connectée à un premier des deux photodétecteurs, et les interrupteurs 1004 et 1006 ont leurs premières bornes de conduction connectée à un deuxième des deux photodétecteurs. A titre d'autre exemple alternatif, dans un pixel PIX à quatre photodétecteurs qui peuvent être des photodiodes non pincées, les interrupteurs 1000, 1002, 1004 et 1006 ont chacun leur première borne de conduction connectée à un photodétecteur distinct.

Dans le circuit CIRC1 de la figure 10, les mémoires 408, 412, 416 et 420 sont remplacées par des amplificateurs opérationnels montés en amplificateur transimpédance capacitif (CTIA de l'anglais "Capacitive Transimpedance Amplifier") respectivement référencés CTIAI, CTIAIc, CTIAQ et CTIAQc en figure 10.

Les interrupteurs 1000, 1002, 1004 et 1006 ont leurs deuxièmes bornes de conduction couplées, par exemple connectées, aux amplificateurs respectifs CTIAI, CTIAIc, CTIAQ et CTIAQc.

Chaque amplificateur transimpédance capacitif comprend un interrupteur de réinitialisation couplant la sortie et l'entrée, par exemple inverseuse, de l'amplificateur. Cet interrupteur de réinitialisation est, par exemple, commandé par un signal rst. La mise à l'état passant de l'interrupteur de réinitialisation d'un amplificateur transimpédance capacitif permet de remettre à zéro la valeur intégrée dans l'amplificateur, et, plus particulièrement, la valeur intégrée dans la capacité de l'amplificateur transimpédance capacitif.

Dans le circuit CIRC1 de la figure 10, les grilles de transfert 410, 414, 418 et 422 sont remplacées par des interrupteurs respectivement 1010, 1014, 1018 et 1022. Les interrupteurs 1010, 1014, 1018 et 1022 sont commandés par des signaux respectivement RI, RIc, RQ et RQc similaires à ceux décrits en relation avec les circuits CIRC1 fonctionnant dans le domaine des charges. Chaque interrupteur 1010, 1014, 1018 et 1022 a une première borne de conduction connectée à la sortie d'un amplificateur respectivement CTIAI, CTIAIc, CTIAQ et CTIAQc.

A titre d'exemple, les deuxièmes bornes de conduction des interrupteurs sont toutes connectées à un même noeud 1024 comme c'est le cas dans l'exemple de la figure 10. A titre d'exemple, ce noeud 1024 peut correspondre à la sortie du circuit CIRC1. A titre d'exemple alternatif, comme cela est illustré en figure 10, le noeud 1024 est couplé à la sortie du circuit CIRC1 par un circuit de suppression du bruit thermique.

Ce circuit de suppression du bruit thermique comprend, de manière similaire à ce qui a été décrit précédemment, par exemple en relation avec la figure 7 :
une capacité Cth ayant une électrode 700 connectée au noeud 1024 et une autre électrode 702 connectée à l'entrée d'un circuit tampon analogique Buff, et
un interrupteur ITth connecté entre l'électrode 702 de la capacité Cth et le potentiel de référence GND.

Le circuit Buff est une alternative au transistor suiveur MSF2 qui est plus encombrante, mais qui n'a pas de chute de tension grille-source. A titre d'exemple, l'implémentation décrite en relation avec la figure 10 est pertinente dans un capteur où les photodiodes PD de plusieurs pixels PIX sont disposées selon une seule rangées de photodétecteurs PD.

Dans l'exemple de la figure 10, tous les interrupteurs 1010, 1014 1018 et 1022 ont leurs secondes bornes de conduction connectées à un même noeud 1024.

Dans d'autres exemples non illustrés, les deuxièmes bornes de conduction des interrupteurs 1010 et 1014 sont connectées à un même premier noeud, et les deuxièmes bornes de conductions des interrupteurs 1018 et 1022 sont connectées à un même deuxième noeud. Les premier et deuxième noeuds peuvent correspondre aux sorties du circuit CIRC1, ou être relié chacun à une sortie correspondante du circuit CIRC1 par un circuit de suppression du bruit thermique.

Dans encore d'autres exemples non illustrés, les deuxièmes bornes de conduction des interrupteurs 1010, 1014 1018 et 1022 sont connectées chacune à un noeud distinct pouvant correspondre à une sortie du circuit CIRC1, ou être relié à une sortie correspondante du circuit CIRC1 par un circuit de suppression du bruit thermique. Dans de tels exemples, les interrupteurs 1010, 1014, 1018 et 1022 peuvent être omis.

Dans les pixels PIX décrits jusqu'ici, pour détecter (ou tester ou vérifier) si un pixel PIX est à une distance z égale à zdet d'une scène, il suffit d'émettre le signal lumineux à onde continue modulée en fréquence avec une pente B/T égale à fs.c/(2.zdet). La valeur zdet peut donc être modifiée, soit en modifiant la pente B/T, soit en modifiant la fréquence fs, soit en modifiant ces deux paramètres.

Ainsi, selon un mode de réalisation, le circuit de commande est configuré pour maintenir constante la fréquence fs à chaque émission d'une pluralité d'émissions du signal à onde continue modulée en fréquence, et pour modifier la pente de la modulation en fréquence à chaque émission. Ainsi, à chaque émission de la pluralité d'émission du signal à onde continue modulée en fréquence, la période d'intégration correspondante permet de détecter une distance différente du capteur à la scène.

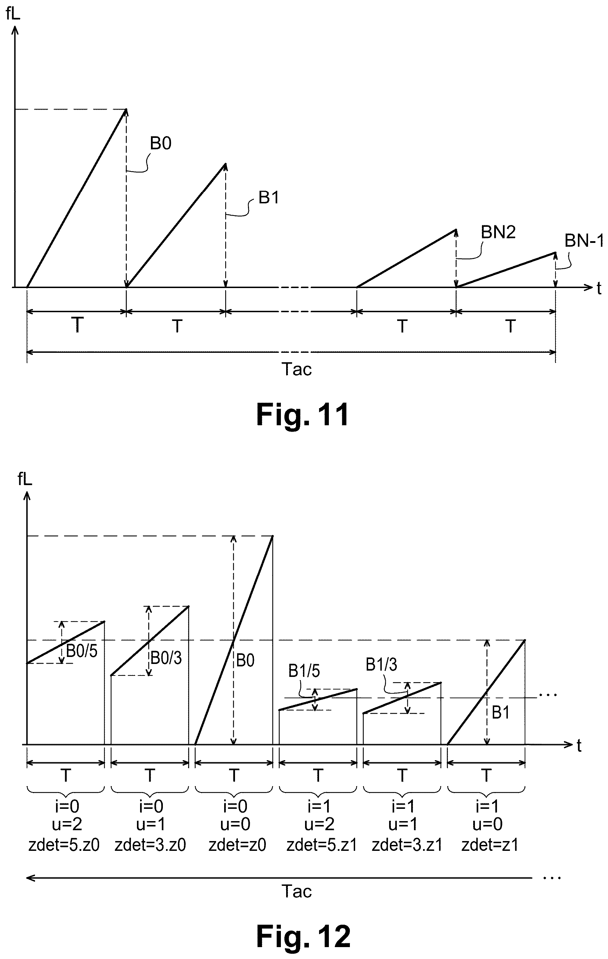

La figure 11 illustre par des chronogrammes, un exemple de fonctionnement dans lequel, pendant une période d'acquisition Tac, N périodes d'intégrations sont mises en œuvre et correspondent toutes à l'émission d'un signal lumineux à onde continue modulée en fréquence pendant une durée Ti avec une pente Bi/Ti, avec i un indice entier allant de 0 à N-1.

Plus particulièrement, dans l'exemple de la figure 11, la fréquence fs est constante pour chacune des N périodes d'émission, et la durée Ti est constante et égale à T pour chacune des N périodes d'émission. En outre, à chaque période d'émission de durée T, la pente Bi/Ti est modifiée, dans cet exemple en modifiant la valeur de l'amplitude Bi de la plage de variation de la fréquence fL du signal optique émis puisque Ti est constante et égale à T.

Dans l'exemple de la figure 11, pour une valeur donnée de la fréquence fs, qui est maintenue constante pendant les N périodes d'émission successives, il est donc possible, avec un pixel PIX, de détecter N distances différentes zi égales à (fs.c.T)/(2.Bi) à l'issue de la période d'acquisition Tac. Dit autrement, dans ce cas, le pixel PIX permet de vérifier pour chacune des N distances zi différentes, si le pixel PIX se trouve ou non à cette distance zi de la scène, c'est à dire si le pixel PIX se trouve ou non à cette distance zi du point de la scène associé à ce pixel PIX.

Bien que cela ne soit pas représenté en figure 11, en pratique, entre deux émissions successives d'indices i et i+1, il peut être prévu un temps mort correspondant à un temps de traitement par le pixel PIX, pour déterminer si le pixel PIX doit ou non mettre son signal det à l'état actif. Ce temps de traitement correspond, par exemple, au temps nécessaire au pixel PIX pour produire chacun des signaux IIc et QQc et pour les comparer aux tensions V+ et V-. A titre de variante, la détermination que le pixel PIX doit ou non mettre son signal det à l'état actif est faite pendant que le pixel PIX intègre le signal de la période d'émission suivante. Ce temps de traitement est donc caché, et il n'y a alors pas besoin de prévoir de temps mort entre deux périodes d'intégration successives.

Dans l'exemple ci-dessus, lorsque la valeur absolue des seuils VTH- et VTH+ est fixée à une valeur trop basse, il peut en résulter que, pour une pente Bi/T donnée correspondant à une distance à détecter zi, un signal reçu sigL ayant une fréquence de battement égale à (2.u+1).fs, avec u un nombre entier supérieur ou égal à 1, déclenche le pixel PIX (det actif en sortie du pixel PIX). Par exemple, si les seuils VTH- et VTH+ sont trop bas, les signaux 304 et 310, voire également les signaux 308 et 306, de la figure 3 peuvent déclencher le pixel PIX. Dit autrement, pour une pente Bi/T donnée, le pixel PIX va fournir un signal det actif comme si le point de la scène associé au pixel PIX se trouve à une distance zi = (fs.c.T)/(2.Bi) du pixel alors que le point le point de la scène associé au pixel PIX est en fait à une distance égale à (2.u+1).zi du pixel.

Selon un mode de réalisation, lors de la détection par un pixel PIX de N distances successives zi = z0.kⁱ = (fs.c.T)/(2.Bi) = kⁱ.(fs.c.T)/(2.B0), avec i croissant, z0 une distance initiale, B0 une excursion en fréquence déterminée par z0, et k un facteur de résolution entre distances, il est prévu, pour chaque indice i, de détecter successivement les distances (2.u+1).zi = (2.u+1).z0.kⁱ = (2.u+1).kⁱ.(fs.c.T)/(2.B0) avec u entier décroissant allant de U à 0, et U un entier strictement positif, par exemple égal à 2. Pour cela, pour chaque valeur d'indice i, il est prévu U+1 périodes d'émission successives de durées T et d'amplitudes (ou d'excursions) respectives Bi/(2.u+1) = B0/(kⁱ.(2.u+1)) avec u indice décroissant allant de U à 0. Cela permet, pour un couple de pente et de fréquence fs, de détecter d'abord les distances correspondant aux harmoniques impaires de cette fréquence fs et de lever des ambiguïtés concernant la distance détectée.

Pour chaque valeur donnée de l'indice i, il est préférable que les plages d'excursion en fréquence Bi/(2.u+1) pour cette valeur donnée de l'indice i aient la même valeur moyenne, de sorte que les signaux sigL correspondants reçus par le pixel PIX soient comparables. En effet, lorsque la source de lumière cohérente est un laser semi-conducteur, la modulation du courant d'injection qui est appliquée au laser pour moduler sa fréquence optique produit en même temps une modulation de l'intensité (ou puissance optique) du laser. Il est donc préférable d'avoir une valeur moyenne d'intensité sensiblement identique entre les U+1 périodes d'émission d'un indice i donné, car l'amplitude des oscillations (à la fréquence de battement fR) est proportionnelle à cette valeur moyenne.

La figure 12 illustre, sur une durée d'acquisition Tac, le principe décrit ci-dessus pour U égal à 2 et pour les indices i égal 0 et i égal 1.

Dans cet exemple, les durées Ti sont toutes égales à une même durée T. Pour chaque période T d'émission, la figure 12 indique la valeur du couple d'indices i et u, et la distance zdet effectivement détectée (testée) par le pixel PIX.

Dans l'exemple de la figure 12, entre chaque deux émissions successives correspondant à deux couples différents d'indices i et u, il y a un temps mort correspondant à un temps de traitement par le pixel PIX pour déterminer si oui ou non le signal det du pixel doit être activé. En variante, comme cela a été précédemment indiqué, ce temps de traitement à la fin de chaque période d'émission est masqué pendant le début de la période d'émission suivante, et il n'y a alors pas de temps mort entre les périodes d'émission.

Si, pour la période d'émission correspondant à un couple d'indices i et u donné de la période d'acquisition Tac, le pixel PIX fournit un signal det actif, il n'est plus nécessaire de vérifier si le pixel PIX fournira un signal det actif pour les périodes d'émission suivantes de cette période d'acquisition Tac, et le pixel PIX peut alors être désactivé pour ces périodes d'émission suivantes. La distance effectivement détectée par le pixel est alors la distance zdet = (2.u+1) .zi = (2.u+1).z0.kⁱ = (2.u+1).kⁱ.(fs.c.T)/(2.B0), avec i et u les indices du couple d'indices i et u correspondant à la période d'émission ayant entrainé la fourniture d'un signal det actif par le pixel PIX.

De préférence, pour chaque valeur d'indice i, chaque distance zdet = zi qui est égale à une distance zdet = (2.u+1).zj avec j indice entier allant de 0 à i-1 et u compris entre 1 et U, l'émission du signal correspondant au couple d'indices i et u=0 peut être omise puisque la distance zdet = zi = (2.u+1).zj a déjà été testée pour le couple d'indices j et u.

Dit autrement, de préférence, les périodes d'émission vérifiant, pour u allant de 1 à U, i allant de 0 à N et j allant de 0 à i-1, l'égalité (2.u+1).k^{j} = kⁱ, n'ont pas besoin d'être dupliquées. L'égalité ci-dessus est équivalente à l'égalité i-j = logₖ(2.u+1), avec logₖ, l'opérateur logarithme en base k. En choisissant le facteur de résolution k pour que, pour au moins certaines valeurs de l'indice u comprises entre 1 et U, logₖ(2.u+1) soit égal à un entier, il est donc possible de réduire le nombres de période d'émission.

Ainsi, selon un mode de réalisation à fréquence d'intégration fs constante, il est donc prévu, pour chaque valeur d'un indice i croissant allant de 0 à N-1, pour un indice u allant décroissant allant de U à 0, d'émettre un signal à onde continue modulée en fréquence avec une excursion en fréquence égale à B0/(kⁱ.(2.u+1) uniquement si, pour une valeur k de résolution donnée et pour q entier allant de 1 à U, logₖ(2.q+1) est différent de i-j, avec j un indice entier allant de 0 à i-1. De préférence, lors des émissions successives définies ci-dessus, un pixel PIX fournissant un signal det actif à pour l'une desdites émissions est désactivées pour les émissions suivantes.

On a décrit ci-dessus des modes de réalisation dans lesquelles la pente de la modulation en fréquence est modifiée entre des émissions successives d'un signal à onde continue modulée en fréquence alors que la fréquence fs est maintenue constante pour les périodes d'intégrations correspondantes.

Plus particulièrement, dans ces modes de réalisation la pente de la modulation en fréquence est modifiée en modifiant l'excursion en fréquence de la modulation alors que la durée de la modulation (ou de l'émission) est maintenue constante. Dans des variantes de réalisation, la pente est modifiée en changeant la durée de chaque émission, l'excursion de la modulation en fréquence pouvant être maintenue constante ou être, elle aussi modifiée, entre les émissions successives. L'adaptation de la description faite ci-dessus à de telles variantes de réalisation est à la portée de la personne métier à partir des indications fonctionnelles données ci-dessus pour le cas où la durée d'émission est maintenue constante et égale à T.

Par ailleurs, pour détecter (ou tester) plusieurs distances d'un pixel PIX à une scène, plutôt que de faire varier la pente de la modulation en fréquence à chaque émission d'une pluralité d'émissions d'un signal à onde continue modulée en fréquence, il est possible de garder une pente de modulation en fréquence constante pour toutes les émissions en faisant varier la fréquence fs.

Ainsi, selon un mode de réalisation, le circuit de commande est configuré pour maintenir constante la pente de la modulation en fréquence à chaque émission d'une pluralité d'émissions du signal du signal à onde continue modulée en fréquence, et pour modifier la valeur la fréquence fs à chaque émission. Ainsi, à chaque émission de la pluralité d'émission du signal à onde continue modulée en fréquence, la période d'intégration correspondante permet de détecter une distance différente du capteur à la scène.

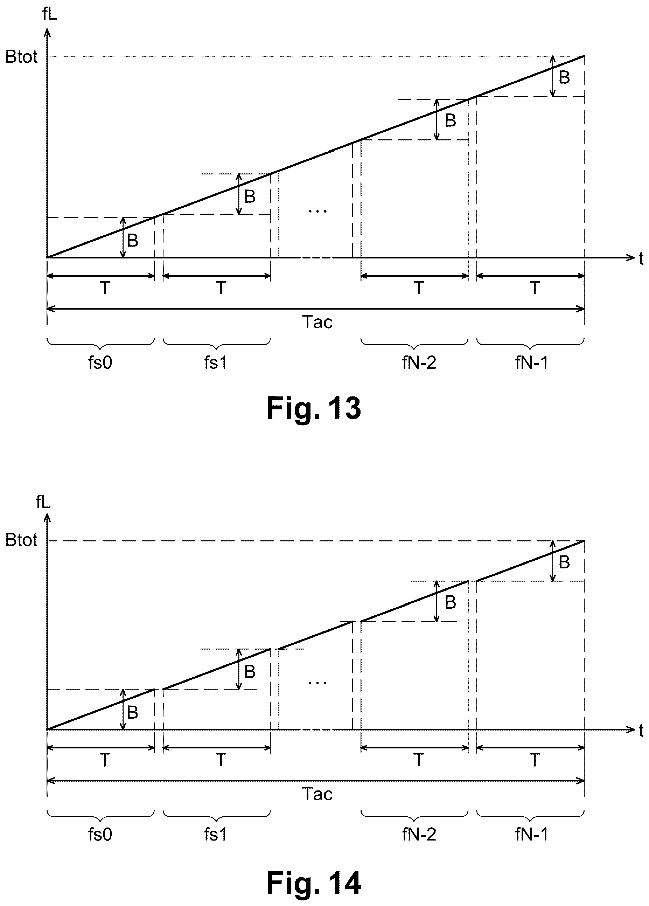

La figure 13 illustre par des chronogrammes, un exemple de fonctionnement dans lequel, pendant une période d'acquisition Tac, N périodes d'émission sont mises en œuvre et correspondent toutes à l'émission d'un signal lumineux à onde continue modulée en fréquence avec une pente constante, par exemple égale B/T avec B constant et T constant, mais avec une fréquence d'intégration fsi différente, avec i un indice allant de 0 à N-1.

Plus particulièrement, dans l'exemple de la figure 13, le signal à onde continue modulée en fréquence est émis de manière continue sur toute la durée Tac avec une excursion de la modulation en fréquence égale à Btot et une modulation de fréquence fL ininterrompue sur toute la durée Tac. Btot est déterminé de sorte que, pour chacune des N périodes d'émission la pente de la modulation en fréquence soit constante et, dans cet exemple, égale à B/T. En outre, à chacune des N périodes d'émission, la fréquence d'intégration fsi est modifiée, avec i un indice entier allant de 0 à N-1. Ainsi, chaque période d'émission de durée T et de pente constante B/T correspondant à l'indice i permet de détecter une distance zi = (c.T.fsi)/(2.B).

Comme cela est représenté en figure 13, en pratique, entre deux émissions successives d'indices i et i+1, il peut être prévu un temps mort correspondant au temps de traitement par le pixel PIX pour déterminer si le signal det doit être activé ou non. L'excursion Btot est alors déterminée en tenant compte de ces temps morts, puisque, dans cet exemple, la modulation de la fréquence fL ne s'arrête pas pendant ces temps de traitement. En variante, comme cela a été précédemment indiqué, ce temps de traitement à la fin de chaque période d'émission est masqué pendant le début de la période d'émission suivante, et il n'y a alors pas de temps mort entre les périodes d'émission.

La figure 14 illustre par des chronogrammes, un autre exemple de fonctionnement dans lequel, pendant une période d'acquisition Tac, N périodes d'intégrations sont mises en œuvre et correspondent toutes à l'émission d'un signal lumineux à onde continue modulée en fréquence avec une pente B/T constante, par exemple égale à B/T avec B constant et T constant, mais avec une fréquence d'intégration fsi différente, avec i un indice allant de 0 à N-1.

Plus particulièrement, dans l'exemple de la figure 14, par rapport à l'exemple de la figure 13, la modulation de la fréquence fL est interrompue entre chaque deux périodes d'émission successives d'indices i et i+1, pendant le temps de traitement par le pixel PIX. En outre, dans l'exemple de la figure 14, pour chaque deux périodes d'émission successives d'indices i et i+1, la fréquence de modulation fL au début de la période d'émission d'indice i+1 est égale à la fréquence de modulation à la fin de la période d'émission d'indice i.

Il en résulte que, pour des valeurs identiques de N, B et T, l'excursion en fréquence Btot de la modulation sur toute la durée Tac dans l'exemple de la figure 14 est plus faible que dans l'exemple de la figure 13.

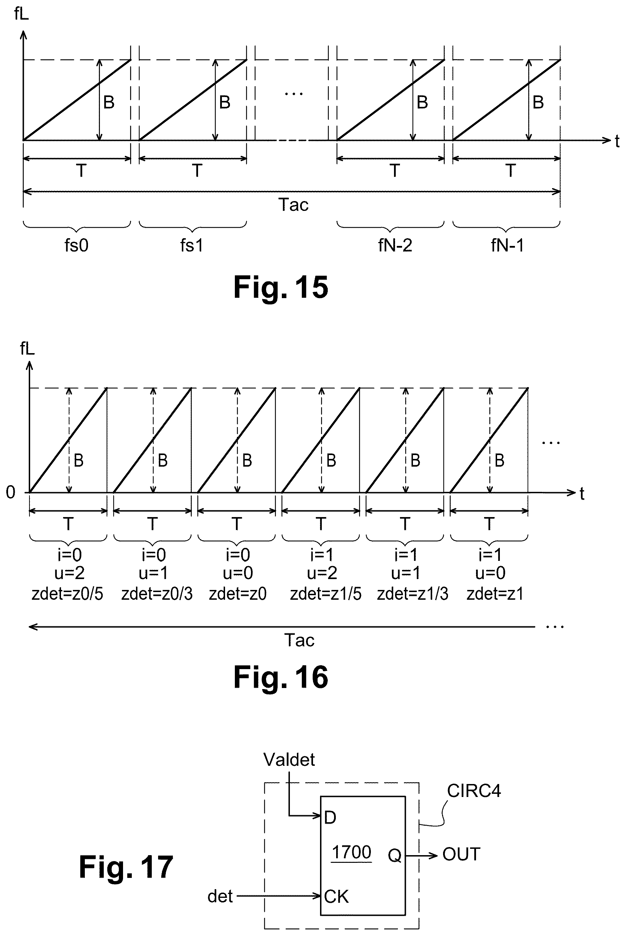

La figure 15 illustre par des chronogrammes, un autre exemple de fonctionnement dans lequel, pendant une période d'acquisition Tac, N périodes d'intégrations sont mises en œuvre et correspondent toutes à l'émission d'un signal lumineux à onde continue modulée en fréquence avec une pente constante, par exemple égale à B/T, mais à une fréquence d'intégration fsi différente, avec i un indice allant de 0 à N-1.

Plus particulièrement, dans l'exemple de la figure 15, comme dans l'exemple de la figure 14, la modulation de la fréquence fL peut être interrompue entre chaque deux périodes d'émission successives d'indices i et i+1, pendant un temps mort correspondant au temps de traitement par le pixel PIX. Toutefois, dans l'exemple de la figure 15, la valeur de la fréquence de modulation fL est la même au début de chaque période d'émission. En variante, comme cela a été précédemment indiqué, ce temps de traitement à la fin de chaque période d'émission est masqué pendant le début de la période d'émission suivante, et il n'y a alors pas de temps mort entre les périodes d'émission.

Un avantage du mode de réalisation de la figure 15 par rapport à ceux des figures 13 et 14 est que l'excursion totale Btot de la modulation en fréquence est plus faible, et est égale à B en figure 15. Un autre avantage du mode de réalisation de la figure 15 par rapport à ceux des figures 13 et 14 est que l'intensité moyenne du laser et l'amplitude des oscillations du signal sigL varient moins entre deux périodes d'émission successives.

La personne du métier sera en mesure de prévoir d'autres exemples de fonctionnement, en combinant les exemples des figures 13, 14 et 15.

Par exemple, les N périodes d'émission successives peuvent être regroupée en Q ensembles successifs comprenant chacun plusieurs périodes d'émission successives, avec Q un entier strictement supérieur à 1. Dans chacun des Q ensembles de plusieurs périodes d'émission successives, la fréquence de modulation fL peut être modifiée de manière continue en interrompant ou non la variation de la fréquence de modulation interrompue pendant chaque temps de traitement séparant deux émissions successives, et en ayant une même valeur de fréquence de modulation au début de la première période d'émission de chacun des Q ensembles de plusieurs périodes d'émission successives.

Dans les exemples ci-dessus, pour une valeur donnée de la pente de la modulation en fréquence qui est maintenue constante et égale à B/T pendant les N émissions (ou intégrations) successives, il est donc possible, avec un pixel PIX, de détecter N distances différentes zi égales à (fsi.c.T)/(2.B) à l'issue de la période d'acquisition Tac. Dit autrement, dans ce cas, le pixel PIX permet de vérifier pour chacune des N distances zi différentes, si le pixel PIX se trouve ou non à cette distance zi de la scène, c'est à dire si le pixel PIX se trouve à cette distance zi du point de la scène associé à ce pixel PIX.

Dans les exemples ci-dessus, lorsque la valeur absolue des seuils VTH- et VTH+ est fixée à une valeur trop basse, il peut en résulter que, pour une fréquence fsi donnée correspondant à une distance à détecter zi, un signal reçu sigL ayant une fréquence de battement égale à fsi/(2.u+1), avec u un nombre entier supérieur ou égal à 1, déclenche le pixel PIX (det actif en sortie du pixel PIX). Par exemple, si les seuils VTH- et VTH+ sont trop bas, les signaux 304 et 310, voire également les signaux 308 et 306, de la figure 3 peuvent déclencher le pixel PIX. Dit autrement, pour une fréquence fsi donnée, le pixel PIX va fournir un signal det actif comme si le pixel PIX avait détecté un point à une distance zi = (fsi.c.T)/(2.B) alors que le point détecté par le pixel est en fait à une distance égale à zi/(2.u+1).

Selon un mode de réalisation, lors de la détection par un pixel PIX de N distances successives zi = z0.kⁱ = (fsi.c.T)/(2.B) = kⁱ.(fs0.c.T)/(2.B), avec i croissant, z0 une distance initiale, et k un facteur de résolution entre distances, il est prévu, pour chaque indice i, de détecter successivement les distances zi/(2.u+1) = (z0.kⁱ)/(2.u+1) = kⁱ.(fs0.c.T)/((2.u+1).2.B) avec u entier décroissant allant de U à 0, et U un entier strictement positif, par exemple égal à 2. Pour cela, pour chaque valeur de l'indice i, il est prévu U+1 périodes d'émission successives correspondants à U+1 valeurs successives de fréquences d'intégration fsi/(2.u+1) = kⁱ.fs0/(2.u+1) avec u indice décroissant allant de U à 0. Cela permet, pour un couple de pente et de fréquence fsi, de détecter d'abord les distances correspondant aux harmoniques impaires de cette fréquence fsi et de lever des ambiguïtés concernant la distance détectée.

La figure 16 illustre, sur une durée d'acquisition Tac, le principe décrit ci-dessus pour U égal à 2 et pour les indices i égal 0 et i égal 1, pour un exemple où la modulation en fréquence à chaque période d'émission est du type décrit en relation avec la figure 15.

Pour chaque période T d'émission, la figure 16 indique la valeur du couple d'indices i et u, et la distance zdet effectivement détectée (testée) par le pixel PIX.

Si, pour la période d'émission correspondant à un couple d'indices i et u donnés de la période d'acquisition Tac, le pixel PIX fournit un signal det actif, il n'est plus nécessaire de vérifier si le pixel PIX fournira un signal det actif pour les périodes d'émission suivantes de cette période d'acquisition Tac, et le pixel PIX peut alors être désactivé pour ces périodes d'émission suivantes. La distance effectivement détectée par le pixel est alors la distance zdet = zi/(2.u+1) = z0.kⁱ/(2.u+1) = kⁱ.(fs0.c.T)/(2.u+1).2.B0), avec i et u les indices du couple d'indices i et u correspondant à la période d'émission ayant entrainé la fourniture d'un signal det actif par le pixel PIX.

De préférence, pour chaque valeur d'indice i, chaque distance zdet = zi qui est égale à une distance zdet = zj/(2.u+1) avec j indice entier allant de 0 à i-1 et u compris entre 1 et U, l'émission du signal correspondant au couple d'indices i et u=0 peut être omise puisque la distance zdet = zi = zj/(2.u+1) a déjà été testée pour le couple d'indices j et u.

Dit autrement, de préférence, les périodes d'émission vérifiant, pour u allant de 1 à U, l'égalité k^{j} /(2.u+1) = kⁱ, n'ont pas besoin d'être dupliquées. L'égalité ci-dessus est équivalente à l'égalité i-j = logₖ(1/(2.u+1)), avec logₖ, l'opérateur logarithme en base k. En choisissant le facteur de résolution k pour que, pour au moins certaines valeurs de l'indice u comprises entre 1 et U, logₖ(1/(2.u+1)) soit égal à un entier, il est donc possible de réduire le nombre de périodes d'émission.

Ainsi, selon un mode de réalisation à pente de modulation en fréquence constante, il est donc prévu, pour chaque valeur d'un indice i croissant allant de 0 à N-1, pour un indice u allant décroissant allant de U à 0, d'émettre un signal à onde continue modulée en fréquence avec une fréquence d'intégration de l'intégration correspondante égale à kⁱ.fs0/(2.u+1) uniquement si, pour une valeur k de résolution donnée et pour q entier allant de 1 à U, logₖ(1/(2.q+1)) est différent de i-j, avec j un indice entier allant de 0 à i-1. De préférence, lors des émissions successives définies ci-dessus, un pixel PIX fournissant un signal det actif pour l'une desdites émissions est désactivé pour les émissions suivantes.

Dans les exemples de modes de réalisation et variantes du pixel PIX décrits précédemment en relation avec les figures 1, 4, 6, 7, 8, 9 et 10, le circuit CIRC4 du pixel PIX est configuré pour mettre en œuvre une lecture événementielle du pixel PIX, c'est à dire pour que le pixel PIX ne soit lu que lorsque le signal det du pixel PIX a été activé à la fin d'une intégration correspondante.

Toutefois, dans d'autres exemples, le circuit CIRC4 est configuré pour permettre une lecture séquentielle du pixel PIX, c'est à dire pour lire le pixel PIX après chaque intégration, que le signal det ait été activé ou non par le pixel PIX à la fin de cette période d'intégration.

Par exemple, pour cela, le circuit CIRC4 du pixel est configuré pour mémoriser, après chaque période d'intégration, l'état du signal det lorsque cet état est valide, par exemple quand le signal ENB est actif. Cette valeur mémorisée de l'état du signal det est ensuite lue par un circuit de lecture du système électronique comprenant le pixel PIX.

Par exemple, ce système électronique est un capteur d'image comprenant une matrice de pixels PIX, et le circuit de lecture du capteur est configuré pour lire, par exemple après chaque intégration, la valeur mémorisée dans le circuit CIRC4 en lisant les lignes de pixels de la matrice les unes après les autres, et simultanément tous les pixels PIX de la ligne en cours de lecture.

A titre d'autre exemple, pour un capteur d'image comprenant une matrice de pixels PIX dans laquelle :
- pour une période d'acquisition Tac donnée, chaque pixel PIX qui fournit un signal det actif pour une période d'intégration donnée de la période d'acquisition Tac est désactivé pour les périodes d'intégration suivantes de cette période d'acquisition ; et
- le circuit CIRC4 de chaque pixel PIX est configuré pour mémoriser, après chaque intégration, une valeur nulle si le signal det est resté inactif, et une valeur de distance détectée si le signal det a été activé,
le circuit de lecture du capteur peut être configuré pour lire la valeur mémorisée dans le circuit CIRC4 de chaque pixel PIX à la fin de la période d'acquisition, en lisant les lignes de pixels de la matrice les unes après les autres, et simultanément tous les pixels PIX de la ligne en cours de lecture.

Un exemple de mise en œuvre d'un tel circuit CIRC4 est illustré en figure 17.

Dans cette figure 17, le circuit CIRC4 du pixel PIX reçoit, par exemple d'un circuit de lecture du système électronique comprenant le pixel PIX, un mot numérique Valdet indiquant, à chaque période d'intégration, la valeur zdet de la distance détectée par le pixel PIX. Le circuit CIRC4 comprend un registre 1700 configuré pour mémoriser ce mot numérique Valdet si le signal det commute à l'état actif, et rester à une valeur par défaut nulle sinon. A titre d'exemple, le signal Valdet est reçu par une entrée de donnée D du registre 1700, et le signal det est reçue par une entrée de synchronisation CK du registre 1700.

Ainsi, pendant une période d'acquisition comprenant plusieurs périodes d'intégration correspondant chacune à une émission d'un signal à onde continue modulée en fréquence, lorsqu'à la fin d'une période d'intégration, un pixel PIX met son signal det à l'état actif pour indiquer qu'il se trouve à la distance zdet correspondante de la scène, cette distance zdet est mémorisée par le circuit CIRC4 du pixel PIX, et le pixel PIX est désactivé pour les périodes d'intégration suivantes de la période d'acquisition.

A la fin de la période d'acquisition, le circuit CIRC4 est lu par un circuit de lecture du capteur comprenant le pixel PIX, c'est à dire que la distance zdet que le pixel PIX a détecté pendant cette période d'acquisition est lue par le circuit de lecture. Par exemple, le circuit de lecture vient lire un mot numérique OUT disponible en sortie du registre 1700, par exemple sur une sortie Q du registre 1700, ce mot OUT correspondant à la valeur nulle par défaut si le pixel PIX n'a jamais activé son signal det au cours de la période d'acquisition, et au mot Valdet mémorisé si le pixel PIX a activé son signal det à la fin d'une période d'intégration de la période d'acquisition. En fonction de la configuration du registre 1700, le mot Valdet mémorisé dans le registre 1700 lorsque le signal det a été actif, peut être lu par bit par bit si la sortie du registre 1700 est une sortie série, ou en lisant simultanément toutes les bascules du registre 1700 si la sortie du registre 1700 est une sortie parallèle.

De cette façon, une seule lecture de chacun des pixels PIX du capteur mise en œuvre à la fin de chaque période d'acquisition permet d'obtenir directement une image des distances du capteur à la scène pour cette période d'acquisition.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus. En particulier, les photodétecteurs PD des pixels PIX, les autres composants des pixels PIX, les circuits non décrits permettant de venir lire les pixels PIX, et, par exemple, des circuits de traitement des informations obtenues à la suite des lectures des pixels PIX peuvent tous être mis en œuvre dans et sur une même couche d'un matériau semiconducteur, c'est à dire dans un seul niveau ("tier" en anglais), ou, de manière alternative, peuvent être répartis entre plusieurs couches de matériaux semiconducteurs, c'est à dire entre plusieurs niveaux ("tiers" en anglais), par exemple selon la technologie désignée par le sigle 3DSL.

## Revendications

1. Pixel (PIX) comprenant :
au moins un photodétecteur (PD) ;
un premier circuit (CIRC1) configuré pour fournir, après chaque période d'intégration correspondant à une période d'émission (T) d'un signal lumineux à onde continue modulée en fréquence, des premier, deuxième, troisième et quatrième signaux (I, Q, Ic, Qc) représentatifs d'une quantité de charges photogénérées dans ledit au moins un photodétecteur pendant respectivement des premières, deuxièmes, troisièmes et quatrièmes durées (D1, D2, D3, D4) de la période d'intégration répétées à une fréquence d'intégration (fs), les deuxièmes durées (D2) étant déphasées de Π/2 par rapport aux premières durées (D1), les troisièmes durées (D3) étant déphasées de Π par rapport aux premières durées (D1), les quatrièmes durées (D4) étant déphasées de 3*Π/2 par rapport aux premières durées (D1), et les premières, deuxièmes, troisièmes, et quatrièmes durées ayant toutes une même durée ;
un deuxième circuit (CIRC2) configuré pour fournir un cinquième signal (IIc) déterminé par la différence des premier et troisième signaux (I, Ic), et un sixième signal déterminé (QQc) par la différence des deuxième et troisième signaux (Q, Qc) ; et
un troisième circuit (CIRC3) configuré pour :
- comparer chacun des cinquième et sixième signaux (IIc, QQc) à une première tension (V+) déterminée par seuil positif (VTH+) et à une deuxième tension (V-) déterminée par un seuil négatif (VTH-), les seuils positif et négatif ayant une même valeur absolue,
dans lequel la valeur absolue des seuils positif et négatif est déterminée de sorte qu'au moins l'un des cinquième et sixième signaux (IIc, QQc) est supérieur est supérieur à la première tension (V+) ou inférieur à la deuxième tension (V-) lorsqu'un signal lumineux reçu (sigL) par le pixel a une fréquence de battement (fR) égale à la fréquence d'intégration (fs).

2. Capteur comprenant :
un ou plusieurs pixels (PIX) selon la revendication 1 ;
une source lumineuse cohérente configurée pour fournir, à chaque période d'émission (T), le signal lumineux à onde continue modulée en fréquence ;
un dispositif optique configuré, à chaque période d'émission (T), pour émettre une première partie du signal à onde continue modulée en fréquence vers une scène et une deuxième partie du signal lumineux à onde continue modulée en fréquence vers chaque pixel (PIX), de sorte que le signal lumineux (sigL) reçu par chaque pixel corresponde à la superposition de la deuxième partie du signal lumineux à onde continue modulée en fréquence et d'une réflexion par un point de la scène associé au pixel de la première partie du signal lumineux à onde continue modulée en fréquence.

3. Capteur selon la revendication 2, dans lequel le capteur comprend un circuit de commande configuré pour commander plusieurs périodes d'émission (T) du signal à onde continue modulée en fréquence et, à chacune desdites plusieurs périodes d'émission, pour maintenir constante une pente de la modulation en fréquence du signal lumineux à onde continue modulée en fréquence et modifier une valeur de la fréquence d'intégration (fs).

4. Capteur selon la revendication 2, dans lequel le capteur comprend un circuit de commande configuré pour commander plusieurs périodes d'émission (T) du signal à onde continue modulée en fréquence, et, à chacune desdites plusieurs périodes d'émission, pour maintenir constante une valeur de la fréquence de d'intégration (fs) et modifier une pente de la modulation en fréquence du signal lumineux à onde continue modulée en fréquence.

5. Capteur selon l'une quelconque des revendications 2 à 4, dans lequel, après chaque période d'intégration (T), le troisième circuit (CIRC3) de chaque pixel est en outre configuré pour fournir un signal de détection actif (det) si l'un et/ou l'autre des cinquième et sixième signaux (IIc, QQc) est supérieur à la première tension (V+) ou inférieur à la deuxième tension (V-).

6. Capteur selon la revendication 5, dans lequel les premier, deuxième et troisième circuits (CIRC2, CIRC3) sont configurés pour que, après chaque période d'intégration, le signal de détection soit actif :
si une différence entre les premier et troisième signaux (I, Ic) est, en valeur absolue, supérieure à la valeur absolue des seuils positif et négatif (VTH+, VTH-) ; et/ou si une différence entre les deuxième et quatrième signaux (Q, Qc) est, en valeur absolue, supérieure à la valeur absolue des seuils positif et négatif (VTH+, VTH-).

7. Capteur selon la revendication 5 ou 6, dans lequel :
le capteur comprend un circuit de lecture d'événement d'adresse ; et
chaque pixel comprend un circuit de sortie (CIRC4) configuré pour détecter que le signal de détection (det) est actif et pour fournir, suite à une détection que le signal de détection est actif, un signal d'adresse du pixel au circuit de lecture d'événement d'adresse, le circuit de sortie (CIRC4) et le circuit de lecture d'événement d'adresse étant, de préférence, configurés pour communiquer l'un avec l'autre selon un protocole poignée de main.

8. Capteur selon la revendication 2, dans lequel le capteur comprend un circuit de commande configuré pour :
maintenir constante la fréquence d'intégration (fs) pendant une période d'acquisition (Tac) ; et
pendant la période d'acquisition, pour un indice entier croissant i allant de 0 à N-1, avec N un entier strictement positif, et, pour chaque valeur de l'indice i, pour un indice u décroissant allant de U à 0, avec U un entier strictement positif, commander, pour chaque couple d'indices i et u, une période d'émission (T) du signal à onde continue modulé en fréquence avec une excursion de la modulation en fréquence égale à B0/(kⁱ.(2.u+1)), avec B0 une valeur d'excursion en fréquence déterminée par une valeur initiale de distance à détecter (z0) et k une valeur positive de résolution, de préférence uniquement si, pour q entier allant de 1 à U, logₖ(2.q+1) est différent de i-j, avec j un indice entier allant de 0 à i-1.

9. Capteur selon la revendication 2, dans lequel le capteur comprend un circuit de commande configuré pour maintenir constante une pente de modulation en fréquence à chaque période d'émission d'une période d'acquisition ; et pendant la période d'acquisition, pour un indice entier croissant i allant de 0 à N-1, avec N un entier strictement positif, et, pour chaque valeur de l'indice i, pour un indice u décroissant allant de U à 0, avec U un entier strictement positif, pour commander, pour chaque couple d'indices i et u, une période d'émission du signal à onde continue modulé en fréquence et une valeur de la fréquence d'intégration égale à kⁱ.fs0/(2.u+1) avec fs0 une valeur de fréquence d'intégration déterminée par une valeur initiale de distance à détecter (Z0) et k une valeur positive de résolution, de préférence uniquement si, pour q entier allant de 1 à U, logₖ(1/(2.q+1)) est différent de i-j, avec j un indice entier allant de 0 à i-1.
